# EUROPEAN PATENT SPECIFICATION

(11) **EP 4 495 060 B1**
(45) Date of publication and mention of the grant of the patent: **08.04.2026**
(21) Application number: 22931957.9
(22) Date of filing: 14.03.2022
(51) Int. Cl.: C01B 3/38, H01M 8/04, H01M 8/0612, H01M 8/12, B01J 8/02, H01M 8/04014

(54) **FUEL PROCESSING DEVICE**
BRENNSTOFFVERARBEITUNGSVORRICHTUNG
DISPOSITIF DE TRAITEMENT DE COMBUSTIBLE

(43) Date of publication of application: 22.01.2025
(73) Proprietor: MITSUBISHI ELECTRIC CORPORATION, Chiyoda-ku Tokyo 100-8310 (JP)
(72) Inventor: SHINOKI, Toshio, Tokyo 100-8310 (JP); GOMYO, Taisaku, Tokyo 100-8310 (JP); KIKUCHI, Shogo, Tokyo 100-8310 (JP); KAWAMOTO, Makoto, Tokyo 100-8310 (JP); OKU, Masao, Tokyo 100-8310 (JP); KIKUCHI, Yuto, Tokyo 100-8310 (JP)
(74) Representative: Meissner Bolte Partnerschaft mbB
(86) International application number: PCT/JP2022/011335
(87) International publication number: WO 2023/175672

(56) References cited:
- WO-A1-2016/009853
- JP-A- 2002 187 705
- JP-A- 2014 009 129
- JP-A- 2014 072 028
- JP-A- 2016 058 351
- JP-A- 2020 047 399
- US-A1- 2008 038 622
- US-A1- 2016 172 698
- US-B2- 9 537 165

## Description

### Technical Field

This invention relates to a fuel processing device.

### Background Art

A fuel processing device is used in a fuel cell system, a hydrogen station, or the like. The fuel processing device generates a reformed gas containing hydrogen by a reforming reaction of a hydrocarbon-based raw material such as a natural gas, alcohols, or ammonia. The reforming reaction is an endothermic reaction, and hence thermal energy is required for the reforming reaction. Thus, the fuel processing device includes a combustor configured to generate thermal energy.

In Patent Literature 1, a hydrogen generating device is described. This hydrogen generating device includes a reformer, a combustor, and an exhaust gas path. A reforming catalyst is filled inside the reformer. The reformer reforms a fuel to generate a reformed gas containing hydrogen. The combustor heats the reformer. The exhaust gas path covers a periphery of an outer wall of the reformer. A combustion exhaust gas from the combustor flows through the exhaust gas path.

### Citation List

### Patent Literature

[PTL 1] JP 2017- 105 695 A

### Summary of the Invention

### Technical Problem

In the above-mentioned hydrogen generating device, the reformer is mainly heated from an outer peripheral side by the combustion exhaust gas, and hence there is a limitation in the heat transfer area between the reformer and the combustion exhaust gas. Thus, in the above-mentioned hydrogen generating device, there is a problem in that thermal efficiency is degraded.

This invention has been made in order to solve the problems as described above, and has an object to provide a fuel processing device that can obtain a higher thermal efficiency.

### Solution to the Problem

According to this invention, there is provided a fuel processing device including: a reforming unit configured to generate a reformed gas from a raw material; and a combustion unit configured to combust a fuel and a combustion supporting gas in a combustion space to generate a combustion gas. The reforming unit includes: a first tubular wall; and a second tubular wall arranged on an outer peripheral side with respect to the first tubular wall.

A reforming reaction flow path is formed between the first tubular wall and the second tubular wall, the reforming reaction flow path being configured to be filled with a reforming catalyst and to allow the raw material and the reformed gas to flow through the reforming reaction flow path. A combustion gas flow path configured to allow the combustion gas to flow through the combustion gas flow path is formed on an inner peripheral side with respect to the first tubular wall. The combustion gas flow path is adjacent to the reforming reaction flow path across the first tubular wall.

An outer peripheral flow path configured to allow an outer peripheral gas to flow through the outer peripheral flow path is formed on an outer peripheral side with respect to the second tubular wall. The outer peripheral flow path is adjacent to the reforming reaction flow path across the second tubular wall.

The fuel processing device further includes: a merging portion configured to allow the combustion gas having flowed through the combustion gas flow path and the outer peripheral gas having flowed through the outer peripheral flow path to merge with each other; an exhaust gas flow path configured to allow the combustion gas and the outer peripheral gas that have merged at the merging portion to flow through the exhaust gas flow path as an exhaust gas; an oxidizing agent flow path configured to allow an oxidizing agent supplied from a heating source to pass through the oxidizing agent flow path; an oxidizing agent branching portion provided in the oxidizing agent flow path; a combustion supporting gas flow path that connects between the oxidizing agent branching portion and the combustion unit and is configured to allow a part of the oxidizing agent to flow through the combustion supporting gas flow path as the combustion supporting gas; and an outer peripheral gas introducing flow path that connects between the oxidizing agent branching portion and the outer peripheral flow path and is configured to allow the other part of the oxidizing agent to flow through the outer peripheral gas introducing flow path as the outer peripheral gas.

### Advantageous Effects of the Invention

According to this invention, in the fuel processing device, a higher thermal efficiency can be obtained.

### Brief Description of the Drawings

FIG. 1 is a schematic cross-sectional view of a fuel processing device according to a first embodiment.
FIG. 2 is a graph for showing a temperature distribution of the fuel processing device according to the first embodiment.
FIG. 3 is a schematic cross-sectional view of a fuel processing device according to a second embodiment.
FIG. 4 is a graph for showing a temperature distribution of the fuel processing device according to the second embodiment.
FIG. 5 is a schematic cross-sectional view of a fuel processing device according to a third embodiment.
FIG. 6 is a graph for showing a temperature distribution of the fuel processing device according to the third embodiment.
FIG. 7 is a schematic cross-sectional view of a fuel processing device according to a fourth embodiment.
FIG. 8 is a schematic cross-sectional view of a fuel processing device according to a modification example of the fourth embodiment.
FIG. 9 is a schematic cross-sectional view of a fuel processing device according to a fifth embodiment.
FIG. 10 is a schematic cross-sectional view of a fuel processing device according to a sixth embodiment.

### Description of Embodiments

### First Embodiment

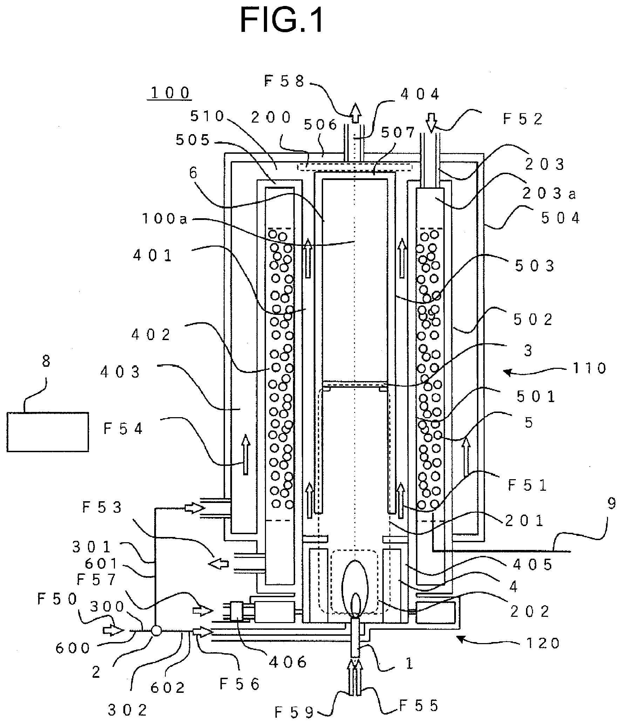

A fuel processing device according to a first embodiment is described. FIG. 1 is a schematic cross-sectional view of the fuel processing device according to this embodiment. The up-and-down direction of FIG. 1 represents a vertical direction.

As illustrated in FIG. 1, a fuel processing device 100 has a cylindrical shape about a center axis 100a. The center axis 100a extends in the up-and-down direction. The fuel processing device 100 includes a reforming unit 110 and a combustion unit 120. The combustion unit 120 is provided below the reforming unit 110. The combustion unit 120 generates a combustion gas F51 for heating the reforming unit 110.

The reforming unit 110 has a multiple tube structure including a flame tube wall 503, an inner wall 501, a middle wall 502, and an outer wall 504. Each of the flame tube wall 503, the inner wall 501, the middle wall 502, and the outer wall 504 has a cylindrical shape about the center axis 100a. The inner wall 501 is arranged on the outer peripheral side with respect to the flame tube wall 503 so as to surround the flame tube wall 503.

The middle wall 502 is arranged on the outer peripheral side with respect to the inner wall 501 so as to surround the inner wall 501. The outer wall 504 is arranged on the outer peripheral side with respect to the middle wall 502 so as to surround the middle wall 502. The inner wall 501 is an example of a first tubular wall. The middle wall 502 is an example of a second tubular wall.

A combustion gas flow path 401 is formed in a space between the flame tube wall 503 and the inner wall 501. The combustion gas flow path 401 is formed in an annular shape in horizontal cross section. The combustion gas flow path 401 extends in the up-and-down direction. The combustion gas F51 flows upward through the combustion gas flow path 401.

An upper end portion of the space between the inner wall 501 and the middle wall 502 is closed by a closing wall 505. The closing wall 505 is provided between the inner wall 501 and the middle wall 502.

A reforming reaction flow path 402 is formed in a space between the inner wall 501 and the middle wall 502. The reforming reaction flow path 402 is formed in an annular shape in horizontal cross section. The reforming reaction flow path 402 extends in the up-and-down direction. The reforming reaction flow path 402 is adjacent to the combustion gas flow path 401 across the inner wall 501. A raw material F52 and a reformed gas F53 flow downward through the reforming reaction flow path 402.

A reforming catalyst 5 is filled in the reforming reaction flow path 402. A catalyst layer is formed in the reforming reaction flow path 402 by the reforming catalyst 5. An upper end portion of the reforming catalyst 5 serves as an inlet portion of the reforming reaction flow path 402. A lower end portion of the reforming catalyst 5 serves as an outlet of the reforming reaction flow path 402.

The raw material F52 is supplied to the reforming reaction flow path 402 from the outside of the fuel processing device 100. In the reforming reaction flow path 402, the reformed gas F53 is generated from the raw material F52 due to a catalytic action of the reforming catalyst 5.

On the upstream side with respect to the inlet of the reforming reaction flow path 402 in the flow of the raw material F52, a first raw material preheating unit 203 and a second raw material preheating unit 203a are provided. The second raw material preheating unit 203a is provided on the downstream side with respect to the first raw material preheating unit 203 in the flow of the raw material F52.

The second raw material preheating unit 203a is formed in the space between the inner wall 501 and the middle wall 502. The first raw material preheating unit 203 is formed of a pipe. The first raw material preheating unit 203 passes through an upper surface wall 506 and the closing wall 505, and is connected to the second raw material preheating unit 203a.

The raw material F52 passes through the first raw material preheating unit 203 and the second raw material preheating unit 203a in this order to flow into the reforming reaction flow path 402. The reformed gas F53 generated in the reforming reaction flow path 402 flows out to the outside of the fuel processing device 100.

A reformed gas temperature sensor 9 is provided at the outlet of the reforming reaction flow path 402. The reformed gas temperature sensor 9 detects a temperature of the reformed gas F53 flowing out from the reforming reaction flow path 402, and outputs a detection signal to a controller 8.

A catalyst layer outer peripheral flow path 403 is formed in a space between the middle wall 502 and the outer wall 504. The catalyst layer outer peripheral flow path 403 is formed in an annular shape in horizontal cross section. The catalyst layer outer peripheral flow path 403 extends in the up-and-down direction. The catalyst layer outer peripheral flow path 403 is adjacent to the reforming reaction flow path 402 across the middle wall 502. A catalyst layer outer peripheral gas F54 flows upward through the catalyst layer outer peripheral flow path 403.

An upper end portion of a space on the inner peripheral side with respect to the outer wall 504 is closed by the upper surface wall 506. The upper surface wall 506 is formed in a disk shape about the center axis 100a. The upper surface wall 506 faces the closing wall 505 with a gap. The gap between the upper surface wall 506 and the closing wall 505 serves as a communication portion 510. The space between the flame tube wall 503 and the inner wall 501 and the space between the middle wall 502 and the outer wall 504 are in communication with each other through the communication portion 510. The first raw material preheating unit 203 passes through the communication portion 510.

An exhaust gas flow path 404 is connected to the upper surface wall 506. The exhaust gas flow path 404 is provided on the center axis 100a of the fuel processing device 100. An exhaust gas F58 flows through the exhaust gas flow path 404.

In a radial direction of the reforming unit 110, the reforming reaction flow path 402 is sandwiched by the combustion gas flow path 401 and the catalyst layer outer peripheral flow path 403 from both sides. A direction in which the raw material F52 and the reformed gas F53 flow in the reforming reaction flow path 402 is opposite to the direction in which the combustion gas F51 flows in the combustion gas flow path 401 and the direction in which the catalyst layer outer peripheral gas F54 flows in the catalyst layer outer peripheral flow path 403.

That is, the flows of the raw material F52 and the reformed gas F53 in the reforming reaction flow path 402 are opposite to the flow of the combustion gas F51 in the combustion gas flow path 401 and the flow of the catalyst layer outer peripheral gas F54 in the catalyst layer outer peripheral flow path 403.

Heat exchange is performed through the inner wall 501 between the combustion gas F51 in the combustion gas flow path 401 and the raw material F52 and the reformed gas F53 in the reforming reaction flow path 402. Heat exchange is performed through the middle wall 502 between the catalyst layer outer peripheral gas F54 in the catalyst layer outer peripheral flow path 403 and the raw material F52 and the reformed gas F53 in the reforming reaction flow path 402.

Further, similarly to the reforming reaction flow path 402, the second raw material preheating unit 203a is sandwiched by the combustion gas flow path 401 and the catalyst layer outer peripheral flow path 403 from both sides. Heat exchange is performed through the inner wall 501 between the combustion gas F51 in the combustion gas flow path 401 and the raw material F52 in the second raw material preheating unit 203a. Heat exchange is performed through the middle wall 502 between the catalyst layer outer peripheral gas F54 in the catalyst layer outer peripheral flow path 403 and the raw material F52 in the second raw material preheating unit 203a.

The catalyst layer outer peripheral gas F54 flows through the communication portion 510 around the first raw material preheating unit 203. In the first raw material preheating unit 203, heat exchange is performed between the catalyst layer outer peripheral gas F54 and the raw material F52. The first raw material preheating unit 203 may meander along the circumferential direction of the fuel processing device 100 so as to secure a larger heat transfer area between the first raw material preheating unit 203 and the catalyst layer outer peripheral gas F54.

An upper end portion of the internal space of the flame tube wall 503 is closed by a closing wall 507. The closing wall 507 faces the upper surface wall 506 with a gap.

The combustion unit 120 includes a combustor 1. The combustor 1 is arranged on the center axis 100a. The combustor 1 is arranged below the flame tube wall 503. A combustion fuel F55, a combustion raw material F59, and a combustion supporting gas F56 are supplied to the combustor 1. The combustor 1 combusts the combustion fuel F55 or the combustion raw material F59 and the combustion supporting gas F56. With this, flame is formed in a combustion space 202, and the combustion gas F51 is generated.

A flame partition plate 3 is provided inside the flame tube wall 503. The internal space of the flame tube wall 503 is partitioned into an upper part and a lower part by the flame partition plate 3. A heat shield material 6 is provided in a space above the flame partition plate 3 and below the closing wall 507 inside the flame tube wall 503. A space below the flame partition plate 3 inside the flame tube wall 503 serves as a radiation heat transfer space 201. A lower end of the flame tube wall 503 is opened. The flame partition plate 3 faces the combustor 1 across the radiation heat transfer space 201. The radiation heat transfer space 201 is surrounded by the flame tube wall 503, the flame partition plate 3, and the combustor 1.

The combustion space 202 is formed at a lower portion of the radiation heat transfer space 201. The radiation heat transfer space 201 is connected to a lower end portion of the combustion gas flow path 401. The combustion gas F51 generated by the combustor 1 passes through the combustion space 202 and the radiation heat transfer space 201 to flow into the combustion gas flow path 401. The flame partition plate 3 is heated by radiation heat from the combustion space 202 through the radiation heat transfer space 201.

The periphery of the combustion space 202 is surrounded by a heat shield wall 4. The heat shield wall 4 has a cylindrical shape about the center axis of the fuel processing device 100. The height of the heat shield wall 4 is approximately the same as the height of the combustion space 202, that is, the height of flame formed by the combustor 1.

An air flow path 405 is formed on the outer peripheral side of the heat shield wall 4. The air flow path 405 is formed in an annular shape so as to surround the periphery of the heat shield wall 4. Air F57 for temperature adjustment flows through the air flow path 405. On the upstream side with respect to the air flow path 405 in the flow of the air F57, a flow rate adjustment valve 406 configured to adjust the flow rate of the air F57 is provided. The flow rate adjustment valve 406 is an example of a configuration for adjusting the flow rate of the air F57.

The air F57 is supplied from the air flow path 405 to the combustion gas F51 on the downstream side with respect to the combustion space 202 and on the upstream side with respect to the combustion gas flow path 401. With this, the temperature of the combustion gas F51 flowing into the combustion gas flow path 401 is adjusted.

An oxidizing agent F50 is supplied to the fuel processing device 100 from a heating source (not shown). The oxidizing agent F50 in a state of being heated by the heating source is supplied to the fuel processing device 100. The oxidizing agent F50 to be supplied to the fuel processing device 100 has a temperature higher than the temperature of the raw material F52 to be supplied to the fuel processing device 100. The heating source in this embodiment is a high-temperature fuel cell. Further, the oxidizing agent F50 in this embodiment is a cathode off-gas supplied from the high-temperature fuel cell.

An oxidizing agent inflow pipe 300 is provided in the fuel processing device 100. An oxidizing agent flow path 600 is formed inside the oxidizing agent inflow pipe 300. The oxidizing agent F50 flows through the oxidizing agent flow path 600.

The oxidizing agent inflow pipe 300 branches into a combustion supporting gas conduit 302 and a catalyst layer outer peripheral gas introducing pipe 301 at an oxidizing agent branching portion 2. A combustion supporting gas flow path 602 is formed inside the combustion supporting gas conduit 302. The combustion supporting gas F56 flows through the combustion supporting gas flow path 602. The combustion supporting gas F56 is a part of the oxidizing agent F50.

A catalyst layer outer peripheral gas introducing flow path 601 is formed inside the catalyst layer outer peripheral gas introducing pipe 301. The catalyst layer outer peripheral gas F54 flows through the catalyst layer outer peripheral gas introducing flow path 601. The catalyst layer outer peripheral gas F54 is the other part of the oxidizing agent F50. That is, the oxidizing agent F50 flowing through the oxidizing agent flow path 600 splits into the combustion supporting gas F56 and the catalyst layer outer peripheral gas F54 at the oxidizing agent branching portion 2.

The ratio between the flow rate of the catalyst layer outer peripheral gas F54 and the flow rate of the combustion supporting gas F56 in the oxidizing agent branching portion 2 is set in advance in accordance with the operating condition of the fuel processing device 100 and the combustion condition of the combustor 1. For example, when the oxidizing agent F50 is a cathode off-gas of a solid oxide fuel cell, the ratio between the flow rate of the catalyst layer outer peripheral gas F54 and the flow rate of the combustion supporting gas F56 is set to from about 3: 1 to about 11: 1.

The combustion supporting gas conduit 302 is connected to the combustor 1. With this, a part of the oxidizing agent F50 is supplied to the combustor 1 as the combustion supporting gas F56. The catalyst layer outer peripheral gas introducing pipe 301 is connected to a lower portion of the catalyst layer outer peripheral flow path 403. With this, the other part of the oxidizing agent F50 is supplied to the catalyst layer outer peripheral flow path 403 as the catalyst layer outer peripheral gas F54.

The combustion gas F51 having flowed through the combustion gas flow path 401 and the catalyst layer outer peripheral gas F54 having flowed through the catalyst layer outer peripheral flow path 403 merge with each other at a merging portion 200. The merging portion 200 is formed in a ring shape about the center axis 100a.

The merging portion 200 in this embodiment is located at the upper end portion of the space between the flame tube wall 503 and the inner wall 501. The combustion gas F51 and the catalyst layer outer peripheral gas F54 that have merged at the merging portion 200 turn into the exhaust gas F58. The exhaust gas F58 passes through the exhaust gas flow path 404 to flow out to the outside of the fuel processing device 100.

Although not illustrated, the fuel processing device 100 is surrounded by an appropriate heat insulating material. With this, heat loss due to heat radiation from the fuel processing device 100 is suppressed.

The controller 8 is configured to control the entire fuel processing device 100. The controller 8 includes a microcomputer including, for example, a central processing unit (CPU), a read only memory (ROM), and a random access memory (RAM).

Next, the operation of the fuel processing device according to this embodiment is described. The raw material F52 supplied to the fuel processing device 100 is preheated by the catalyst layer outer peripheral gas F54 in the first raw material preheating unit 203. The raw material F52 is further preheated by the combustion gas F51 and the catalyst layer outer peripheral gas F54 in the second raw material preheating unit 203a. The raw material F52 is preheated in the first raw material preheating unit 203 and the second raw material preheating unit 203a to be heated to from about 350 °C to about 400 °C.

The heated raw material F52 flows into the reforming reaction flow path 402. The raw material F52 of the reforming reaction flow path 402 is heated from the inner peripheral side by the combustion gas F51 flowing through the combustion gas flow path 401. Further, the raw material F52 of the reforming reaction flow path 402 is heated also from the outer peripheral side by the catalyst layer outer peripheral gas F54 flowing through the catalyst layer outer peripheral flow path 403. With this, the raw material F52 passing through the reforming catalyst 5 is heated to from about 550 °C to about 650 °C. Further, the raw material F52 passing through the reforming catalyst 5 is reformed to the reformed gas F53 by a reforming reaction which is an endothermic reaction.

For example, when the raw material F52 is methane and water vapor, a general reforming reaction is expressed by the following Formula (1) and Formula (2). In the reforming reaction flow path 402, an endothermic reaction of methane and water vapor occurs due to the catalytic action of the reforming catalyst 5. With this reaction, hydrogen is generated.

CH₄+H₂O ↔ CO+3H₂ (1)

CO+H₂O ↔ CO₂+H₂ (2)

The flow rate of methane and water vapor is generally represented by the S/C ratio. The S/C ratio is a molar fraction of water vapor (S) with respect to carbon (C) contained in the raw material. In general, the flow rate of the water vapor to be supplied to the reforming reaction flow path 402 is set such that the S/C ratio becomes a constant value within a range of from about 2.5 to about 3.5. As the reforming catalyst 5, for example, Ni-based, Pt-based, or Ru-based reforming catalyst is used. The reforming catalyst 5 is carried on a carrier, such as Al₂O₃ or MgO.

The reformed gas F53 is supplied to the high-temperature fuel cell or the like while maintaining the temperature after the reforming reaction. Examples of the high-temperature fuel cell include a solid oxide fuel cell and a molten carbonate fuel cell.

In the combustor 1, due to a combustion reaction between the combustion supporting gas F56 and the combustion fuel F55 or the combustion raw material F59, the combustion gas F51 having a temperature of from about 700 °C to about 1,200 °C is generated. For example, an ignition plug (not shown) is used for ignition at the combustor 1.

The combustion gas F51 passes through the combustion space 202 and the radiation heat transfer space 201 to flow into the combustion gas flow path 401. The combustion gas F51 flows upward through the combustion gas flow path 401. The heat of the combustion gas F51 is transfer to the reforming reaction flow path 402 through the inner wall 501. With this, the temperature of the combustion gas F51 decreases to about 400 °C. The heat transferred to the reforming reaction flow path 402 is a part of the thermal energy required for the reforming reaction.

Heat transfer from the combustion gas flow path 401 to the reforming reaction flow path 402 is performed by convection of the combustion gas F51. Further, the heat transfer from the combustion gas flow path 401 to the reforming reaction flow path 402 is performed also by radiation from the flame tube wall 503 and radiation from the combustion gas F51. The radiation heat transfer space 201 is formed at the periphery of the combustor 1, and hence a particularly large amount of heat is given to the reforming reaction flow path 402 due to radiation from the radiation heat transfer space 201.

The downstream portion of the combustion space 202 in the flow of the combustion gas F51 is connected to the air flow path 405. With this, the air F57 for temperature adjustment is mixed with the combustion gas F51 on the downstream side with respect to the position at which combustion is completed in the combustion space 202. Thus, the temperature of the combustion gas F51 can be adjusted without affecting the combustion reaction.

In the reformed gas temperature sensor 9, the temperature of the reformed gas F53 at the outlet of the reforming reaction flow path 402 is detected. The controller 8 controls the flow rate of the air F57 based on the temperature detected by the reformed gas temperature sensor 9. For example, the controller 8 controls the flow rate adjustment valve 406 such that the flow rate of the air F57 increases as the temperature of the reformed gas F53 increases. With this, the reaction temperature of the reforming reaction expressed by the Formula (1) and the Formula (2) can be adjusted.

For example, the oxidizing agent F50 having a temperature of from 650 °C to 700 °C is supplied to the oxidizing agent flow path 600 from the heating source. The oxidizing agent F50 splits into the combustion supporting gas flow path 602 and the catalyst layer outer peripheral gas introducing flow path 601 at the oxidizing agent branching portion 2. A part of the oxidizing agent F50 flows through the combustion supporting gas flow path 602 as the combustion supporting gas F56. The combustion supporting gas F56 flows through the combustion supporting gas flow path 602 to be supplied to the combustor 1.

The other part of the oxidizing agent F50 flows through the catalyst layer outer peripheral gas introducing flow path 601 as the catalyst layer outer peripheral gas F54. The catalyst layer outer peripheral gas F54 flows through the catalyst layer outer peripheral gas introducing flow path 601 to be supplied to the catalyst layer outer peripheral flow path 403. The catalyst layer outer peripheral gas F54 gives heat to the reforming reaction flow path 402 via the middle wall 502 while flowing through the catalyst layer outer peripheral flow path 403. The heat is the remaining thermal energy of the thermal energy required for the reforming reaction. The heat is given to the reforming reaction flow path 402 so that the temperature of the catalyst layer outer peripheral gas F54 decreases to about 400 °C.

The catalyst layer outer peripheral gas F54 passes through the communication portion 510 to merge with the combustion gas F51 at the merging portion 200. The merged gas flows out to the outside from the exhaust gas flow path 404 as the exhaust gas F58.

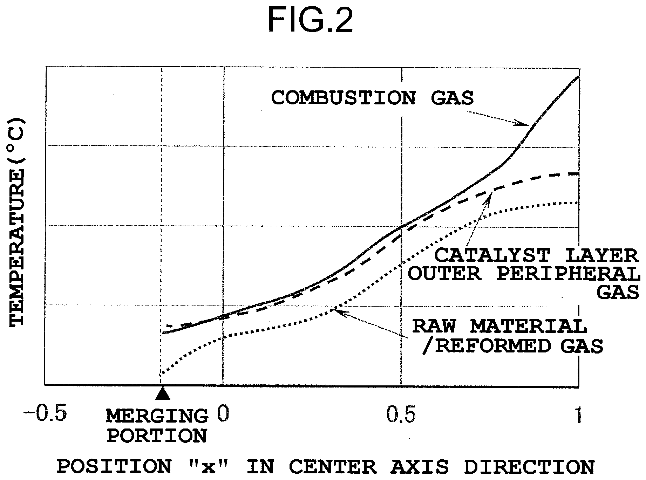

FIG. 2 is a diagram for illustrating a temperature distribution of the fuel processing device according to this embodiment. The horizontal axis of FIG. 2 represents the position "x" in the center axis 100a direction. The position x is non-dimensional with the inlet of the reforming reaction flow path 402 being set as 0, the outlet of the reforming reaction flow path 402 being set as 1, and the length of the reforming reaction flow path 402 in the center axis 100a direction being set as L.

The range in which the position "x" is a negative value indicates the second raw material preheating unit 203a or the first raw material preheating unit 203. The merging portion 200 in this embodiment is provided at a position smaller than 0 in the center axis 100a direction. The vertical axis of FIG. 2 represents the temperature (°C). The solid line in FIG. 2 represents the temperature of the combustion gas F51. The long-dashed broken line in FIG. 2 represents the temperature of the catalyst layer outer peripheral gas F54. The short-dashed broken line in FIG. 2 represents the temperature of the raw material F52 and the reformed gas F53.

When the filled amount of the reforming catalyst 5 or the like is appropriately set, the reforming reaction expressed by the Formula (1) and the Formula (2) is affected by the temperature distribution of the raw material F52 and the reformed gas F53 flowing through the reforming reaction flow path 402.

The combustion supporting gas F56 is supplied to the combustor 1. The combustion supporting gas F56 is a part of the oxidizing agent F50 that has split at the oxidizing agent branching portion 2. The flow rate of the combustion supporting gas F56 defines the flame temperature at the time of combustion and affects the combustion state. That is, when it is assumed that the flow rate of the combustion fuel F55 is constant, the heat insulating flame temperature is theoretically determined.

When the flame temperature is excessively high, there is a fear in that the heat resistance of the member forming the fuel processing device 100 cannot be secured. In contrast, when the flame temperature is excessively low, heat transfer from the combustion gas F51 to the raw material F52 and the reformed gas F53 is difficult. That is, there is an appropriate range for the flame temperature. Further, there is a range of an appropriate oxygen ratio for completely combusting the combustion fuel F55 in the combustion space 202. Thus, the flow rate of the combustion supporting gas F56, that is, a distribution ratio at the oxidizing agent branching portion 2 is substantially determined.

In the fuel processing device of this embodiment, when the flow rate of the combustion supporting gas F56 and the flow rate of the catalyst layer outer peripheral gas F54 are appropriately balanced with respect to the reforming reaction, a temperature distribution generally as illustrated in FIG. 2 is formed.

That is, each of the flame temperature and the oxygen ratio falls within an appropriate range in accordance with the flow rate of the combustion fuel F55, and, when the thermal energy of the catalyst layer outer peripheral gas F54 and the combustion supporting gas F56 falls within an appropriate range, the temperature of the combustion gas F51 and the temperature of the catalyst layer outer peripheral gas F54 decrease similarly from the right side to the left side of FIG. 2.

With this, at the merging portion 200, the temperature of the combustion gas F51 and the temperature of the catalyst layer outer peripheral gas F54 are approximately the same.

Here, the oxidizing agent F50 is not limited to the cathode off-gas supplied from the high-temperature fuel cell. It is only required that the oxidizing agent F50 have a gas temperature of about 600 °C or more and contain a required amount of a composition that is a combustion-supporting gas of a combustion reaction. As the oxidizing agent F50, a high-temperature oxygen-containing exhaust gas in a plant, or the like, can be used.

Fuel to be supplied to the combustor 1 may be the same as the raw material F52 or may be different from the raw material F52. In the fuel to be supplied to the combustor 1, a material which is the same as the raw material F52 and a material different from the raw material F52 may be mixed with each other.

When, for example, the fuel processing device 100 is incorporated in the fuel cell system, the combustion fuel F55 may be a part or an entirety of an anode off-gas. From about 70 % to about 90 % of the hydrogen contained in the reformed gas F53 is consumed for power generation in a fuel cell stack. The remaining hydrogen is contained in the anode off-gas. Thus, a part or an entirety of the anode off-gas can be supplied to the combustor 1 as the combustion fuel F55.

The combustion raw material F59 is the same as the raw material F52. The combustion raw material F59 is supplied to the combustor 1, for example, in a temperature rise process at the time of activation of the fuel processing device 100. As the fuel of the combustor 1, a material in which a part or an entirety of the anode off-gas and the raw material F52 are mixed with each other may be used.

In this embodiment, a part of the oxidizing agent F50 supplied from the heating source is used as the combustion supporting gas F56, and the other part of the oxidizing agent F50 is used as the catalyst layer outer peripheral gas F54. The combustion supporting gas F56 is supplied to the combustor 1 to be combusted together with the combustion fuel F55 or the combustion raw material F59. The catalyst layer outer peripheral gas F54 passes through the catalyst layer outer peripheral flow path 403 to give heat to the second raw material preheating unit 203a and the reforming reaction flow path 402 from the outer peripheral side. The combustion gas F51 generated by combustion passes through the combustion gas flow path 401 to give heat to the second raw material preheating unit 203a and the reforming reaction flow path 402 from the inner peripheral side.

As described above, heat is given to the second raw material preheating unit 203a and the reforming reaction flow path 402 from both sides of the outer peripheral side and the inner peripheral side. With this, the heat transfer area with respect to the second raw material preheating unit 203a and the reforming reaction flow path 402 can be increased, thereby being capable of decreasing the loss of the thermal energy.

Thus, the fuel processing device with a high thermal efficiency is achieved. Further, the heat transfer property is improved, thereby being capable of attaining a reduction in size of the fuel processing device 100.

Further, heat is given to the reforming reaction flow path 402 from both sides of the outer peripheral side and the inner peripheral side so that the temperature of the reforming reaction flow path 402 can be made uniform in the radial direction of the fuel processing device 100. Thus, the reformed gas F53 with a small composition variation due to the reaction can be obtained.

A temperature difference may be caused in the combustion gas F51 in the circumferential direction due to the combustion state of the combustor 1. In this case, through heat transfer from the combustion gas F51, a temperature difference may be caused also in the flame tube wall 503 in the circumferential direction. However, in this embodiment, the radiation heat transfer space 201 is provided on the inner side of the flame tube wall 503.

Thus, when a temperature difference is caused in the circumferential direction of the flame tube wall 503, due to radiation from the radiation heat transfer space 201, heat transfer from a high-temperature portion to a low-temperature portion of the flame tube wall 503 occurs. Thus, the temperature difference in the circumferential direction of the flame tube wall 503 can be reduced. As a result, the temperature of the reformed gas F53 flowing through the reforming reaction flow path 402 can be made uniform in the circumferential direction.

In this embodiment, on the inner peripheral side of the downstream-side portion of the combustion gas flow path 401, the flame partition plate 3 and the heat shield material 6 are provided. Thus, in the downstream-side portion of the combustion gas flow path 401, heat transfer from the radiation heat transfer space 201 is suppressed. With this, the reforming reaction flow path 402 can be prevented from being overheated. As a result, carbon is prevented from precipitating due to heat decomposition of the raw material F52.

As described above, the fuel processing device 100 according to this embodiment includes the reforming unit 110 and the combustion unit 120. The reforming unit 110 is configured to generate the reformed gas F53 from the raw material F52. The combustion unit 120 is configured to combust the combustion fuel F55 or the combustion raw material F59 and the combustion supporting gas F56 in the combustion space 202 to generate the combustion gas F51.

The reforming unit 110 includes the inner wall 501, and the middle wall 502 arranged on the outer peripheral side with respect to the inner wall 501. The reforming reaction flow path 402 is formed between the inner wall 501 and the middle wall 502. The reforming catalyst 5 is filled in the reforming reaction flow path 402. The raw material F52 and the reformed gas F53 flow through the reforming reaction flow path 402.

The combustion gas flow path 401 is formed on the inner peripheral side with respect to the inner wall 501. The combustion gas F51 flows through the combustion gas flow path 401. The combustion gas flow path 401 is adjacent to the reforming reaction flow path 402 across the inner wall 501. The catalyst layer outer peripheral flow path 403 is formed on the outer peripheral side with respect to the middle wall 502.

The catalyst layer outer peripheral gas F54 flows through the catalyst layer outer peripheral flow path 403. The catalyst layer outer peripheral flow path 403 is adjacent to the reforming reaction flow path 402 across the middle wall 502.

The fuel processing device 100 further includes the merging portion 200, the exhaust gas flow path 404, the oxidizing agent flow path 600, the oxidizing agent branching portion 2, the combustion supporting gas flow path 602, and the catalyst layer outer peripheral gas introducing flow path 601.

At the merging portion 200, the combustion gas F51 having flowed through the combustion gas flow path 401 and the catalyst layer outer peripheral gas F54 having flowed through the catalyst layer outer peripheral flow path 403 merge with each other. The combustion gas F51 and the catalyst layer outer peripheral gas F54 that have merged at the merging portion 200 flow through the exhaust gas flow path 404 as the exhaust gas F58. The oxidizing agent F50 supplied from the heating source flows through the oxidizing agent flow path 600. The oxidizing agent branching portion 2 is provided in the oxidizing agent flow path 600. The combustion supporting gas flow path 602 connects between the oxidizing agent branching portion 2 and the combustion unit 120.

The combustion supporting gas flow path 602 allows a part of the oxidizing agent F50 to flow therethrough as the combustion supporting gas F56. The catalyst layer outer peripheral gas introducing flow path 601 connects between the oxidizing agent branching portion 2 and the catalyst layer outer peripheral flow path 403. The catalyst layer outer peripheral gas introducing flow path 601 allows the other part of the oxidizing agent F50 to flow therethrough.

Here, the combustion fuel F55 and the combustion raw material F59 are examples of fuel. The inner wall 501 is an example of the first tubular wall. The middle wall 502 is an example of the second tubular wall. The catalyst layer outer peripheral flow path 403 is an example of an outer peripheral flow path. The catalyst layer outer peripheral gas F54 is an example of an outer peripheral gas. The catalyst layer outer peripheral gas introducing flow path 601 is an example of an outer peripheral gas introducing flow path.

According to this configuration, the raw material F52 and the reformed gas F53 in the reforming reaction flow path 402 are heated by the combustion gas F51 in the combustion gas flow path 401 from the inner peripheral side, and is heated from the outer peripheral side by the catalyst layer outer peripheral gas F54 in the catalyst layer outer peripheral flow path 403.

With this, the heat transfer area with respect to the reforming reaction flow path 402 can be increased, thereby being capable of obtaining a higher thermal efficiency in the fuel processing device 100. Further, the temperature distribution of the reforming reaction flow path 402 can be made uniform in the radial direction, thereby being capable of obtaining the reformed gas F53 with a small composition variation due to a reaction. Further, heat radiation from the reforming reaction flow path 402 can be suppressed, thereby being capable of reducing the loss of the thermal energy.

The fuel processing device 100 according to this embodiment further includes the flame tube wall 503, the flame partition plate 3, and the radiation heat transfer space 201. The flame tube wall 503 is arranged on the inner peripheral side with respect to the inner wall 501. The flame partition plate 3 is arranged inside the flame tube wall 503 so as to correspond to the combustion unit 120. The radiation heat transfer space 201 is surrounded by the flame tube wall 503, the flame partition plate 3, and the combustion unit 120.

According to this configuration, the temperature difference of the flame tube wall 503 in the circumferential direction can be reduced by radiation in the radiation heat transfer space 201. Thus, the temperature of the reformed gas F53 flowing through the reforming reaction flow path 402 can be made uniform in the circumferential direction.

The fuel processing device 100 according to this embodiment further includes the first raw material preheating unit 203. The first raw material preheating unit 203 preheats the raw material F52 flowing into the reforming reaction flow path 402, by heat transfer from the catalyst layer outer peripheral gas F54 or the combustion gas F51. Here, the first raw material preheating unit 203 is an example of a raw material preheating unit. According to this configuration, the raw material F52 is preheated before flowing into the reforming reaction flow path 402, thereby being capable of promoting the reforming reaction in the reforming reaction flow path 402.

The fuel processing device 100 according to this embodiment further includes the air flow path 405. The air flow path 405 supplies the air F57 for temperature adjustment to the combustion gas F51 on the downstream side with respect to the combustion space 202. According to this configuration, the temperature of the combustion gas F51 can be adjusted without affecting the combustion reaction.

The fuel processing device 100 according to this embodiment further includes the reformed gas temperature sensor 9 and the controller 8. The reformed gas temperature sensor 9 detects the temperature of the reformed gas F53 at the outlet of the reforming reaction flow path 402. The controller 8 controls the flow rate of the air F57 to be supplied to the combustion gas F51 based on the temperature detected by the reformed gas temperature sensor 9. According to this configuration, the reaction temperature of the reforming reaction can be adjusted.

In the fuel processing device 100 according to this embodiment, the heating source is the fuel cell. The oxidizing agent F50 is the cathode off-gas supplied from the fuel cell. According to this configuration, heat can be effectively utilized in the fuel cell system.

### Second Embodiment

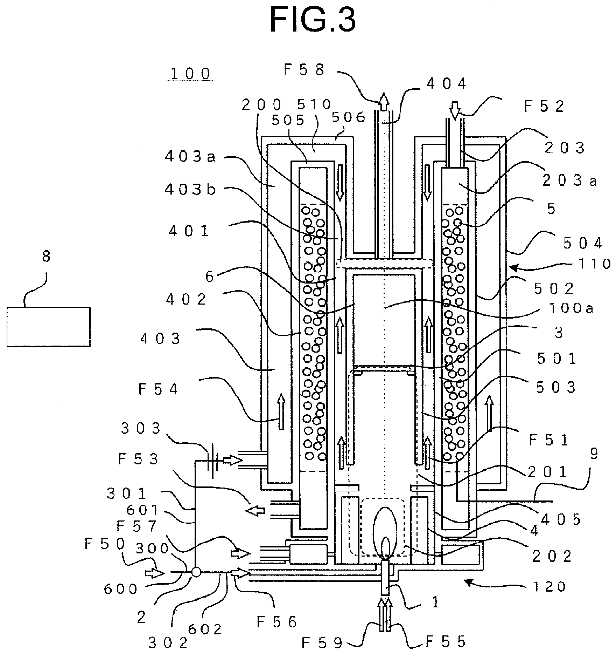

A fuel processing device according to a second embodiment is described. FIG. 3 is a schematic cross-sectional view of the fuel processing device according to this embodiment. The up-and-down direction of FIG. 3 represents a vertical direction.

As illustrated in FIG. 3, the merging portion 200 in this embodiment is formed between the flame tube wall 503 and the inner wall 501. The combustion gas flow path 401 is formed below the merging portion 200 in the space between the flame tube wall 503 and the inner wall 501. A downstream portion 403b of the catalyst layer outer peripheral flow path 403 is formed above the merging portion 200 in the space between the flame tube wall 503 and the inner wall 501.

An upstream portion 403a of the catalyst layer outer peripheral flow path 403 is formed in the space between the middle wall 502 and the outer wall 504. The downstream portion 403b is continuous with the upstream portion 403a through the communication portion 510. The downstream portion 403b faces the upstream portion 403a across the second raw material preheating unit 203a and the reforming reaction flow path 402.

Further, in this embodiment, an oxidizing agent distribution regulator 303 is provided in the catalyst layer outer peripheral gas introducing flow path 601. The oxidizing agent distribution regulator 303 adjusts the ratio between the flow rate of the combustion supporting gas F56 and the flow rate of the catalyst layer outer peripheral gas F54. As the oxidizing agent distribution regulator 303, for example, an orifice plate is used.

The orifice plate is provided so that the pressure loss of the catalyst layer outer peripheral gas F54 in the catalyst layer outer peripheral gas introducing flow path 601 changes. An appropriate orifice plate is provided so that the combustion supporting gas F56 and the catalyst layer outer peripheral gas F54 are distributed at a desired ratio between the respective flow rates at the oxidizing agent branching portion 2. The other configurations are similar to those of the first embodiment.

The operation of the fuel processing device according to this embodiment is described. The catalyst layer outer peripheral gas F54 flows upward through the upstream portion 403a of the catalyst layer outer peripheral flow path 403. The flow of the catalyst layer outer peripheral gas F54 in the upstream portion 403a is opposite to the flows of the raw material F52 and the reformed gas F53 in the reforming reaction flow path 402 and the flow of the raw material F52 in the second raw material preheating unit 203a.

The catalyst layer outer peripheral gas F54 flowing through the upstream portion 403a gives thermal energy to the raw material F52 and the reformed gas F53 flowing through the reforming reaction flow path 402 from the outer peripheral side, and gives thermal energy to the raw material F52 flowing through the second raw material preheating unit 203a from the outer peripheral side.

The catalyst layer outer peripheral gas F54 flows upward through the upstream portion 403a, and then passes through the communication portion 510 to flow around on the inner peripheral side with respect to the second raw material preheating unit 203a and the reforming reaction flow path 402 and flow into the downstream portion 403b. At the downstream portion 403b, the catalyst layer outer peripheral gas F54 flows downward.

The flow of the catalyst layer outer peripheral gas F54 in the downstream portion 403b is parallel to the flows of the raw material F52 and the reformed gas F53 in the reforming reaction flow path 402 and the flow of the raw material F52 in the second raw material preheating unit 203a. The catalyst layer outer peripheral gas F54 flowing through the downstream portion 403b gives thermal energy to the raw material F52 flowing through the second raw material preheating unit 203a from the inner peripheral side, and gives thermal energy to the raw material F52 and the reformed gas F53 flowing through the reforming reaction flow path 402 from the inner peripheral side.

The catalyst layer outer peripheral gas F54 flowing through the downstream portion 403b merges with the combustion gas F51 at the merging portion 200. The merged gas flows out to the outside from the exhaust gas flow path 404 as the exhaust gas F58.

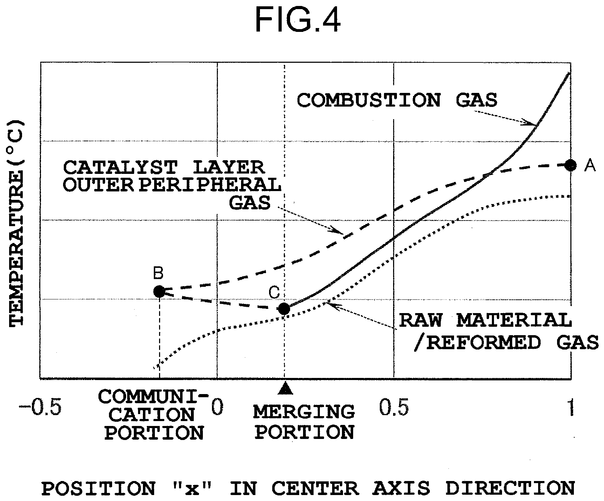

FIG. 4 is a graph for showing the temperature distribution of the fuel processing device according to this embodiment. The horizontal axis and the vertical axis in FIG. 4 are similar to the horizontal axis and the vertical axis in FIG. 2. Here, the merging portion 200 in this embodiment is provided at a position larger than 0 and smaller than 1 in the center axis 100a direction, and is provided on the inner peripheral side with respect to the reforming reaction flow path 402.

The communication portion 510 is provided at a position smaller than 0 in the center axis 100a direction. The solid line in FIG. 4 represents the temperature of the combustion gas F51. The long-dashed broken line in FIG. 4 represents the temperature of the catalyst layer outer peripheral gas F54. The short-dashed broken line in FIG. 4 represents the temperature of the raw material F52 and the reformed gas F53.

Even when the combustion condition as described above is appropriately held, when the distribution ratio of the combustion supporting gas F56 from the oxidizing agent F50 is small in thermal energy, the temperature decrease of the combustion gas F51 accompanying heat transfer to the reforming reaction flow path 402 is larger than the temperature decrease of the catalyst layer outer peripheral gas F54 accompanying heat transfer to the reforming reaction flow path 402. With this, heat transfer performance is degraded.

For example, when the distribution ratio of the combustion supporting gas F56 from the oxidizing agent F50 is small in thermal energy, even when the combustion temperature is the same, the thermal energy of the combustion gas F51 becomes smaller. In contrast, the thermal energy of the catalyst layer outer peripheral gas F54 becomes larger. Thus, as the position in the center axis 100a direction is closer to the inlet of the reforming reaction flow path 402, the temperature of the combustion gas F51 becomes significantly smaller than the temperature of the catalyst layer outer peripheral gas F54.

With this, in the vicinity of the inlet of the reforming reaction flow path 402, the temperature difference between the combustion gas F51 and the raw material F52 and the reformed gas F53 decreases, with the result that the heat transfer property is degraded.

In contrast, the temperature of the catalyst layer outer peripheral gas F54 does not decrease as in the temperature of the combustion gas F51, even when the position in the center axis 100a direction approaches the inlet of the reforming reaction flow path 402. With this, the temperature difference between the catalyst layer outer peripheral gas F54 and the raw material F52 and the reformed gas F53 is larger than the temperature difference between the combustion gas F51 and the raw material F52 and the reformed gas F53. Thus, particularly in the vicinity of the inlet of the reforming reaction flow path 402, the temperature of the reforming reaction flow path 402 is non-uniform in the radial direction of the fuel processing device 100.

In this embodiment, the catalyst layer outer peripheral gas F54 first flows through the upstream portion 403a of the catalyst layer outer peripheral flow path 403. The flow of the catalyst layer outer peripheral gas F54 at the upstream portion 403a is opposite to the flows of the raw material F52 and the reformed gas F53.

The catalyst layer outer peripheral gas F54 at the upstream portion 403a gives thermal energy to the raw material F52 and the reformed gas F53 from the outer peripheral side. The section from the point A to the point B in FIG. 4 represents the temperature distribution of the catalyst layer outer peripheral gas F54 at the upstream portion 403a.

After that, the catalyst layer outer peripheral gas F54 is reversed at the communication portion 510 to flow around on the inner peripheral side with respect to the reforming reaction flow path 402 and flow into the downstream portion 403b of the catalyst layer outer peripheral flow path 403. The flow of the catalyst layer outer peripheral gas F54 at the downstream portion 403b is parallel to the flows of the raw material F52 and the reformed gas F53.

The catalyst layer outer peripheral gas F54 at the downstream portion 403b gives thermal energy to the raw material F52 and the reformed gas F53 from the inner peripheral side. The section from the point B to the point C in FIG. 4 represents the temperature distribution of the catalyst layer outer peripheral gas F54 at the downstream portion 403b.

That is, heat is given to the downstream-side portion of the reforming reaction flow path 402 in the flows of the raw material F52 and the reformed gas F53 by the catalyst layer outer peripheral gas F54 from the outer peripheral side, and heat is given thereto by the combustion gas F51 from the inner peripheral side. Heat is given to the upstream-side portion of the reforming reaction flow path 402 by the catalyst layer outer peripheral gas F54 flowing through the upstream portion 403a from the outer peripheral side, and heat is given thereto by the catalyst layer outer peripheral gas F54 flowing through the downstream portion 403b from the inner peripheral side.

As illustrated in FIG. 4, in this embodiment, also on the inner peripheral side in the vicinity of the inlet of the reforming reaction flow path 402, the temperature difference between the catalyst layer outer peripheral gas F54 at the downstream portion 403b and the raw material F52 and the reformed gas F53 can be secured.

Thus, the heat transfer property of the fuel processing device 100 can be improved. Thus, also when the distribution ratio of the combustion supporting gas F56 is small in thermal energy, the thermal efficiency of the fuel processing device 100 can be improved.

Further, in this embodiment, the temperature of the reforming reaction flow path 402 can be made uniform in the radial direction of the fuel processing device 100. Thus, also when the distribution ratio of the combustion supporting gas F56 is small in thermal energy, the reformed gas F53 with a small composition variation due to a reaction can be obtained.

Further, in this embodiment, the temperature of the combustion gas F51 at the merging portion 200 and the temperature of the catalyst layer outer peripheral gas F54 at the merging portion 200 can be brought closer to each other. Thus, the loss of the thermal energy can be reduced. Accordingly, even when the distribution ratio of the combustion supporting gas F56 is small in thermal energy, the thermal efficiency of the fuel processing device 100 can be improved.

Further, in this embodiment, the combustion reaction can be performed in a range of an appropriate oxygen ratio, thereby being capable of attaining stable complete combustion. Further, the heat transfer property is improved in this embodiment, thereby being capable of attaining a reduction in size of the fuel processing device 100.

In this embodiment, the oxidizing agent distribution regulator 303 is provided in the catalyst layer outer peripheral gas introducing flow path 601, but the configuration is not limited thereto. The distribution ratio between the combustion supporting gas F56 and the catalyst layer outer peripheral gas F54 is determined based on the ratio between the pressure loss of the flow path of the combustion supporting gas F56 and the pressure loss of the flow path of the catalyst layer outer peripheral gas F54. Thus, the oxidizing agent distribution regulator 303 may be provided in the combustion supporting gas flow path 602, and or may be provided in each of the combustion supporting gas flow path 602 and the catalyst layer outer peripheral gas introducing flow path 601.

As described above, in the fuel processing device 100 according to this embodiment, in at least one of the combustion supporting gas flow path 602 and the catalyst layer outer peripheral gas introducing flow path 601, the oxidizing agent distribution regulator 303 configured to determine the distribution ratio between the combustion supporting gas F56 and the catalyst layer outer peripheral gas F54 is provided.

According to this configuration, the temperature of the reforming reaction flow path 402 can be made uniform in the radial direction, thereby being capable of obtaining the reformed gas F53 with a small composition variation due to a reaction.

In the fuel processing device 100 according to this embodiment, the catalyst layer outer peripheral flow path 403 includes the upstream portion 403a and the downstream portion 403b. The upstream portion 403a is formed on the outer peripheral side with respect to the middle wall 502. The downstream portion 403b is formed on the inner peripheral side with respect to the inner wall 501. The merging portion 200 is located on the inner peripheral side with respect to the inner wall 501.

The upstream portion 403a and the downstream portion 403b face each other across the reforming reaction flow path 402. According to this configuration, even when the distribution ratio of the combustion supporting gas F56 is small in thermal energy, the reformed gas F53 with a small composition variation due to a reaction can be obtained, and the thermal efficiency of the fuel processing device 100 can be improved.

### Third Embodiment

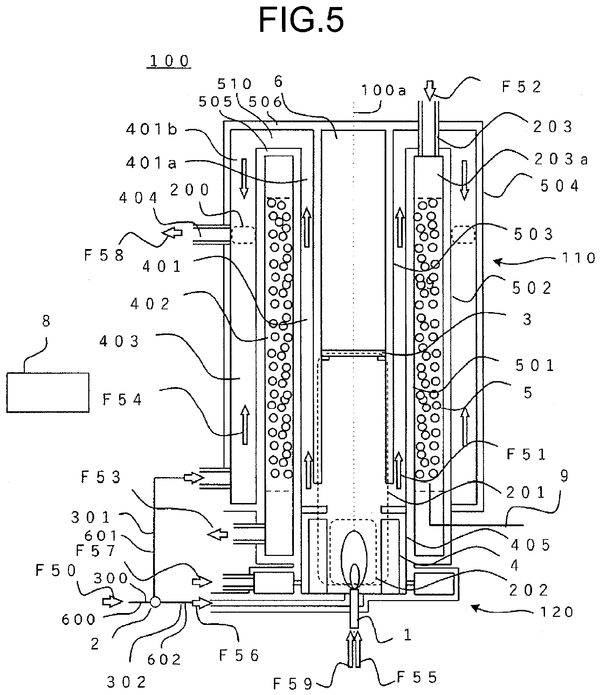

A fuel processing device according to a third embodiment is described. FIG. 5 is a schematic cross-sectional view of the fuel processing device according to this embodiment. The up-and-down direction of FIG. 5 represents a vertical direction.

As illustrated in FIG. 5, the merging portion 200 in this embodiment is formed between the middle wall 502 and the outer wall 504. The catalyst layer outer peripheral flow path 403 is formed below the merging portion 200 in the space between the middle wall 502 and the outer wall 504. A downstream portion 401b of the combustion gas flow path 401 is formed above the merging portion 200 in the space between the middle wall 502 and the outer wall 504.

An upstream portion 401a of the combustion gas flow path 401 is formed in the space between the flame tube wall 503 and the inner wall 501. The downstream portion 401b is continuous with the upstream portion 401a through the communication portion 510. The downstream portion 401b faces the upstream portion 401a across the second raw material preheating unit 203a and the reforming reaction flow path 402. The other configurations are similar to those of the first embodiment.

The operation of the fuel processing device according to this embodiment is described. The combustion gas F51 flows upward through the upstream portion 401a of the combustion gas flow path 401. The flow of the combustion gas F51 in the upstream portion 401a is opposite to the flows of the raw material F52 and the reformed gas F53 in the reforming reaction flow path 402 and the flow of the raw material F52 in the second raw material preheating unit 203a.

The combustion gas F51 flowing through the upstream portion 401a gives thermal energy to the raw material F52 and the reformed gas F53 flowing through the reforming reaction flow path 402 from the inner peripheral side, and gives thermal energy to the raw material F52 flowing through the second raw material preheating unit 203a from the inner peripheral side.

The combustion gas F51 flows upward through the upstream portion 401a, and then passes through the communication portion 510 to flow around on the outer peripheral side with respect to the second raw material preheating unit 203a and the reforming reaction flow path 402 and flow into the downstream portion 401b. At the downstream portion 401b, the combustion gas F51 flows downward.

The flow of the combustion gas F51 in the downstream portion 401b is parallel to the flows of the raw material F52 and the reformed gas F53 in the reforming reaction flow path 402 and the flow of the raw material F52 in the second raw material preheating unit 203a. The combustion gas F51 flowing through the downstream portion 401b gives thermal energy to the raw material F52 flowing through the second raw material preheating unit 203a from the outer peripheral side, and gives thermal energy to the raw material F52 and the reformed gas F53 flowing through the reforming reaction flow path 402 from the outer peripheral side.

The combustion gas F51 flowing through the downstream portion 401b merges with the catalyst layer outer peripheral gas F54 at the merging portion 200. The merged gas flows out to the outside from the exhaust gas flow path 404 as the exhaust gas F58.

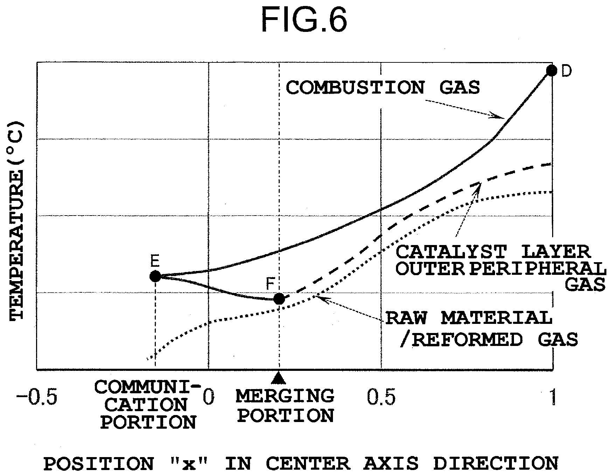

FIG. 6 is a graph for showing the temperature distribution of the fuel processing device according to this embodiment. The horizontal axis and the vertical axis in FIG. 6 are similar to the horizontal axis and the vertical axis in FIG. 2. Here, the merging portion 200 in this embodiment is provided at a position larger than 0 and smaller than 1 in the center axis 100a direction, and is provided on the outer peripheral side with respect to the reforming reaction flow path 402.

The solid line in FIG. 6 represents the temperature of the combustion gas F51. The long-dashed broken line in FIG. 6 represents the temperature of the catalyst layer outer peripheral gas F54. The short-dashed broken line in FIG. 6 represents the temperature of the raw material F52 and the reformed gas F53.

Even when the combustion condition is appropriately held, when the distribution ratio of the catalyst layer outer peripheral gas F54 from the oxidizing agent F50 is small in thermal energy, the temperature decrease of the catalyst layer outer peripheral gas F54 accompanying heat transfer to the reforming reaction flow path 402 is larger than the temperature decrease of the combustion gas F51 accompanying heat transfer to the reforming reaction flow path 402. With this, heat transfer performance is degraded.

For example, when the distribution ratio of the catalyst layer outer peripheral gas F54 from the oxidizing agent F50 is small in thermal energy, the thermal energy of the catalyst layer outer peripheral gas F54 becomes smaller. In contrast, the thermal energy of the combustion gas F51 becomes larger.

Thus, as the position in the center axis 100a direction is closer to the inlet of the reforming reaction flow path 402, the temperature of the catalyst layer outer peripheral gas F54 becomes significantly smaller than the temperature of the combustion gas F51. With this, in the vicinity of the inlet of the reforming reaction flow path 402, the temperature difference between the catalyst layer outer peripheral gas F54 and the raw material F52 and the reformed gas F53 decreases, with the result that the heat transfer property is degraded.

In contrast, the temperature of the combustion gas F51 does not decrease as in the temperature of the catalyst layer outer peripheral gas F54, even when the position in the center axis 100a direction approaches the inlet of the reforming reaction flow path 402. With this, the temperature difference between the combustion gas F51 and the raw material F52 and the reformed gas F53 is larger than the temperature difference between the catalyst layer outer peripheral gas F54 and the raw material F52 and the reformed gas F53. Thus, particularly in the vicinity of the inlet of the reforming reaction flow path 402, the temperature of the reforming reaction flow path 402 is non-uniform in the radial direction of the fuel processing device 100.

In this embodiment, the combustion gas F51 first flows through the upstream portion 401a of the combustion gas flow path 401. The flow of the combustion gas F51 at the upstream portion 401a is opposite to the flows of the raw material F52 and the reformed gas F53. The combustion gas F51 at the upstream portion 401a gives thermal energy to the raw material F52 and the reformed gas F53 from the inner peripheral side. The section from the point D to the point E in FIG. 6 represents the temperature distribution of the combustion gas F51 at the upstream portion 401a.

After that, the combustion gas F51 is reversed at the communication portion 510 to flow around on the outer peripheral side with respect to the reforming reaction flow path 402 and flow into the downstream portion 401b of the combustion gas flow path 401. The flow of the combustion gas F51 at the downstream portion 401b is parallel to the flows of the raw material F52 and the reformed gas F53. The combustion gas F51 at the downstream portion 401b gives thermal energy to the raw material F52 and the reformed gas F53 from the outer peripheral side. The section from the point E to the point F in FIG. 6 represents the temperature distribution of the combustion gas F51 at the downstream portion 401b.

That is, heat is given to the downstream-side portion of the reforming reaction flow path 402 in the flows of the raw material F52 and the reformed gas F53 by the combustion gas F51 from the inner peripheral side, and heat is given thereto by the catalyst layer outer peripheral gas F54 from the outer peripheral side.

Heat is given to the upstream-side portion of the reforming reaction flow path 402 by the combustion gas F51 flowing through the upstream portion 401a from the inner peripheral side, and heat is given thereto by the combustion gas F51 flowing through the downstream portion 401b from the outer peripheral side.

As illustrated in FIG. 6, in this embodiment, also on the outer peripheral side in the vicinity of the inlet of the reforming reaction flow path 402, the temperature difference between the combustion gas F51 at the downstream portion 401b and the raw material F52 and the reformed gas F53 can be secured. Thus, the heat transfer property of the fuel processing device 100 can be improved. Thus, also when the distribution ratio of the catalyst layer outer peripheral gas F54 is small in thermal energy, the thermal efficiency of the fuel processing device 100 can be improved.

Further, in this embodiment, the temperature of the reforming reaction flow path 402 can be made uniform in the radial direction of the fuel processing device 100. Thus, also when the distribution ratio of the catalyst layer outer peripheral gas F54 is small in thermal energy, the reformed gas F53 with a small composition variation due to a reaction can be obtained. Moreover,

Further, in this embodiment, the temperature of the combustion gas F51 at the merging portion 200 and the temperature of the catalyst layer outer peripheral gas F54 at the merging portion 200 can be brought closer to each other. Thus, the loss of the thermal energy can be reduced. Accordingly, even when the distribution ratio of the catalyst layer outer peripheral gas F54 is small in thermal energy, the thermal efficiency of the fuel processing device 100 can be improved.

Further, in this embodiment, the combustion reaction can be performed in a range of an appropriate oxygen ratio, thereby being capable of attaining stable complete combustion. Further, the heat transfer property is improved, thereby being capable of attaining a reduction in size of the fuel processing device 100.

As described above, in the fuel processing device 100 according to this embodiment, the combustion gas flow path 401 includes the upstream portion 401a and the downstream portion 401b. The upstream portion 401a is formed on the inner peripheral side with respect to the inner wall 501. The downstream portion 401b is formed on the outer peripheral side with respect to the middle wall 502. The merging portion 200 is located on the outer peripheral side with respect to the middle wall 502.

The upstream portion 401a of the combustion gas flow path 401 and the downstream portion 401b of the combustion gas flow path 401 face each other across the reforming reaction flow path 402. According to this configuration, even when the distribution ratio of the catalyst layer outer peripheral gas F54 is small in thermal energy, the reformed gas F53 with a small composition variation due to a reaction can be obtained, and the thermal efficiency of the fuel processing device 100 can be improved.

### Fourth Embodiment

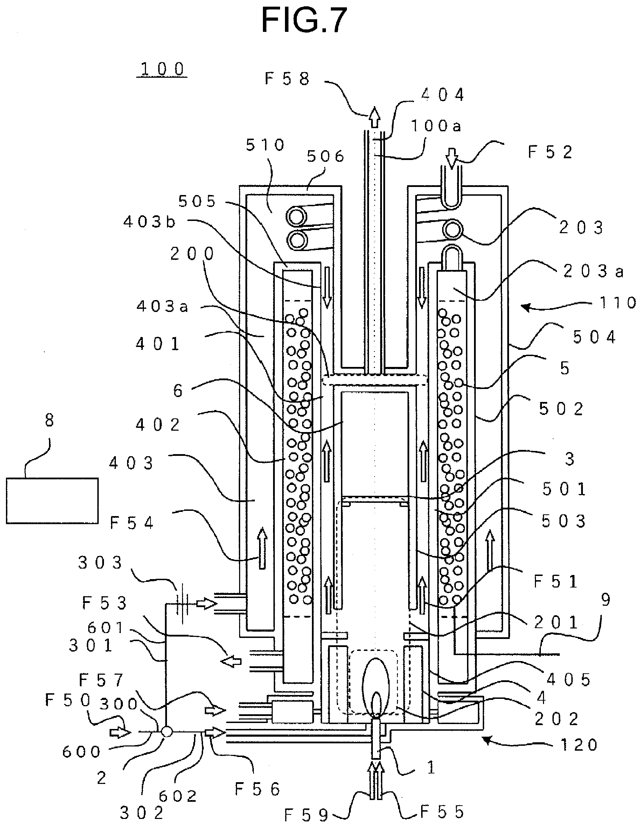

A fuel processing device according to a fourth embodiment is described. FIG. 7 is a schematic cross-sectional view of the fuel processing device according to this embodiment. The up-and-down direction of FIG. 7 represents a vertical direction.

As illustrated in FIG. 7, the first raw material preheating unit 203 penetrates the upper surface wall 506 and the closing wall 505, and passes through the communication portion 510 to be connected to the second raw material preheating unit 203a. The first raw material preheating unit 203 is bent in a helical shape about the center axis 100a in the communication portion 510.

The first raw material preheating unit 203 is formed of a circular pipe. The first raw material preheating unit 203 is configured to absorb a change in distance between the upper surface wall 506 and the closing wall 505 when the helical portion extends and contracts in the center axis 100a direction. The other configurations are similar to those of the second embodiment.

The operation of the fuel processing device according to this embodiment is described. The raw material F52 passes through the first raw material preheating unit 203 and the second raw material preheating unit 203a before being introduced into the reforming reaction flow path 402. In the first raw material preheating unit 203, the raw material F52 receives thermal energy from the catalyst layer outer peripheral gas F54 flowing through the communication portion 510.

With this, the raw material F52 is preheated. In the second raw material preheating unit 203a, the raw material F52 receives thermal energy from the catalyst layer outer peripheral gas F54 flowing through the upstream portion 403a of the catalyst layer outer peripheral flow path 403, and receives thermal energy from the catalyst layer outer peripheral gas F54 flowing through the downstream portion 403b of the catalyst layer outer peripheral flow path 403. With this, the raw material F52 is further preheated. The preheated raw material F52 flows into the reforming reaction flow path 402.

The fuel processing device 100 includes the combustor 1 at a lower portion on the center axis 100a. Thus, in the fuel processing device 100, such a distribution temperature is formed that, in the up-and-down direction, the temperature is higher on the lower portion side, and in the radial direction, the temperature is higher on the inner peripheral side. In the reforming reaction flow path 402, such a generally one-dimensional temperature distribution that the temperature is higher on the lower portion side is formed.

Meanwhile, a flammable gas flows through the reforming reaction flow path 402, and hence the strength of the structure member for forming the reforming reaction flow path 402 is required to be secured. Thus, it is effective that thermal stress is prevented from being generated also under the high-temperature operation state in the inner wall 501 and the middle wall 502. In this embodiment, the first raw material preheating unit 203 is formed in a helical shape so that thermal expansion of the inner wall 501 and the middle wall 502 can be absorbed by the first raw material preheating unit 203.

According to this embodiment, the following effects are obtained in addition to the effects of the second embodiment. The first raw material preheating unit 203 is formed in a helical shape in the communication portion 510, thereby being capable of increasing the heat transfer area of the first raw material preheating unit 203. With this, the heat transfer performance can be improved as compared to a case in which the raw material F52 is preheated only by the second raw material preheating unit 203a.

Further, the first raw material preheating unit 203 is formed in a helical shape so that thermal expansion of the inner wall 501 and the middle wall 502 can be absorbed by the first raw material preheating unit 203. With this, the reliability of the structure member of the fuel processing device 100 can be improved.

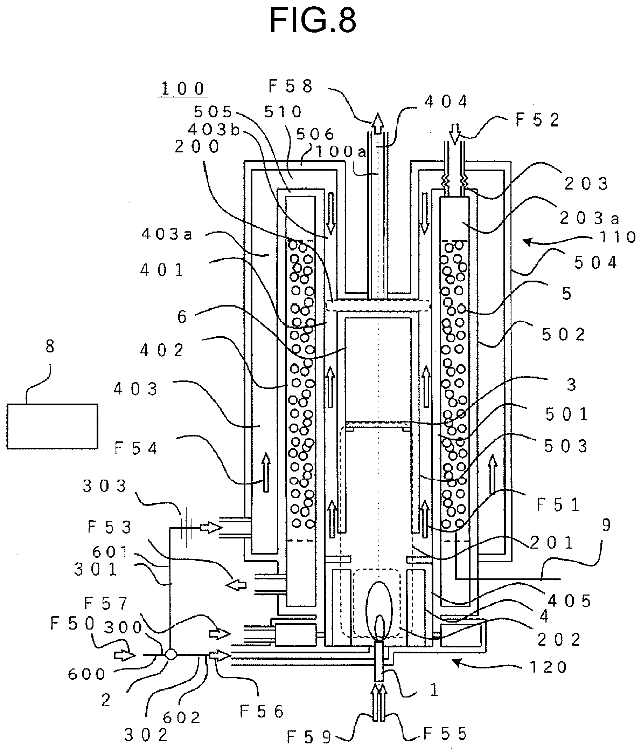

Next, a modification example of this embodiment is described. FIG. 8 is a schematic cross-sectional view of a fuel processing device according to the modification example of this embodiment. As illustrated in FIG. 8, the first raw material preheating unit 203 has a structure that is extendable and contractable in the center axis 100a direction at least between the upper surface wall 506 and the closing wall 505. For example, a bellows tube having stretchability is used as the first raw material preheating unit 203 between the upper surface wall 506 and the closing wall 505. The other configurations are similar to those of the second embodiment.

According to this modification example, the same effects as those of the configuration illustrated in FIG. 7 are obtained. Further, according to this modification example, the length of the first raw material preheating unit 203 in the center axis 100a direction can be made shorter than that of the configuration illustrated in FIG. 7, thereby being capable of reducing the size of the fuel processing device 100. The first raw material preheating unit 203 may meander along the circumferential direction of the fuel processing device 100 so as to secure a large heat transfer area between the first raw material preheating unit 203 and the catalyst layer outer peripheral gas F54.

As described above, in the fuel processing device 100 according to this embodiment, the first raw material preheating unit 203 has a structure that is extendable and contractable. According to this configuration, thermal expansion of the inner wall 501 and the middle wall 502 can be absorbed by the first raw material preheating unit 203, thereby being capable of improving the reliability of the structure member of the fuel processing device 100.

### Fifth Embodiment

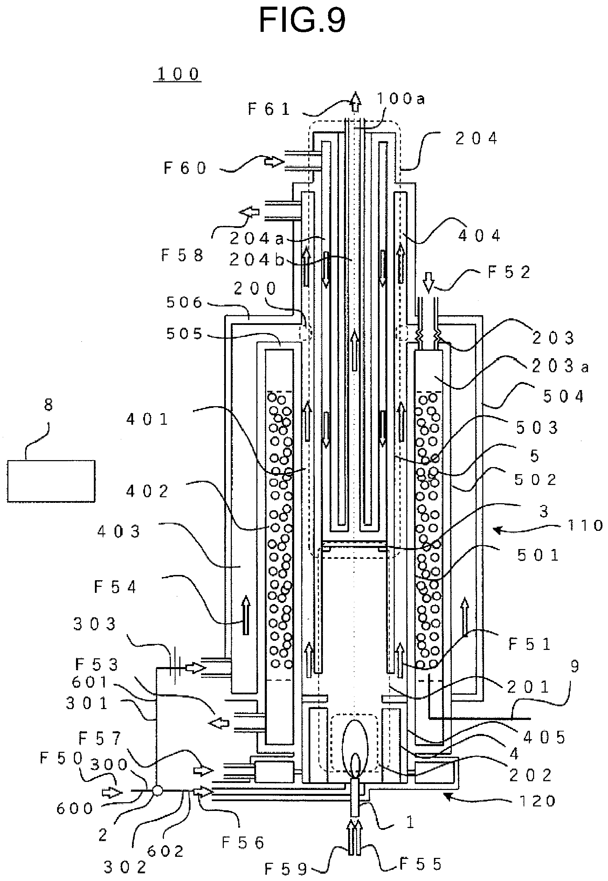

A fuel processing device according to a fifth embodiment is described. FIG. 9 is a schematic cross-sectional view of the fuel processing device according to this embodiment. The up-and-down direction of FIG. 9 represents a vertical direction.

As illustrated in FIG. 9, the fuel processing device 100 includes a cathode gas preheating unit 204. A cathode gas F60 flows into the cathode gas preheating unit 204 from the outside of the fuel processing device 100. In the cathode gas preheating unit 204, the cathode gas F60 is preheated by radiation heat from the combustion space 202 and heat transfer from the exhaust gas F58. The preheated cathode gas F60 is supplied to the heating source outside the fuel processing device 100 as the preheated cathode gas F61. As the heating source, the high-temperature fuel cell (not shown) is used.

The cathode gas preheating unit 204 includes the exhaust gas flow path 404, a preheating flow path 204a, and an exhaust flow path 204b. The exhaust gas flow path 404 is formed above the merging portion 200. The exhaust gas flow path 404 is formed in an annular shape having the same diameter as that of the combustion gas flow path 401 in horizontal cross section. The exhaust gas flow path 404 extends in the up-and-down direction. The exhaust gas F58 in which the combustion gas F51 and the catalyst layer outer peripheral gas F54 have merged with each other flows upward through the exhaust gas flow path 404.

The preheating flow path 204a is arranged on the inner peripheral side with respect to the combustion gas flow path 401 and the exhaust gas flow path 404. The preheating flow path 204a is formed in an annular shape in horizontal cross section. The preheating flow path 204a extends in the up-and-down direction. The preheating flow path 204a is arranged on a side opposite to the radiation heat transfer space 201 across the flame partition plate 3, that is, is arranged above the flame partition plate 3.

The preheating flow path 204a is adjacent to the combustion gas flow path 401 and the exhaust gas flow path 404 across the flame tube wall 503. The cathode gas F60 supplied from the outside of the fuel processing device 100 flows downward through the preheating flow path 204a. The flow of the cathode gas F60 in the preheating flow path 204a is opposite to the flow of the combustion gas F51 in the combustion gas flow path 401 and the flow of the exhaust gas F58 in the exhaust gas flow path 404. The cathode gas F60 in the preheating flow path 204a is preheated through heat exchange between the exhaust gas F58 in the exhaust gas flow path 404 and the combustion gas F51 in the combustion gas flow path 401.

The exhaust flow path 204b is arranged on the inner peripheral side with respect to the preheating flow path 204a. The exhaust flow path 204b extends in the up-and-down direction. A lower end portion of the exhaust flow path 204b is connected to a lower end portion of the preheating flow path 204a. The preheated cathode gas F61 preheated in the preheating flow path 204a flows upward through the exhaust flow path 204b. The preheated cathode gas F61 having flowed out from the exhaust flow path 204b is supplied to the heating source outside the fuel processing device 100.

The first raw material preheating unit 203 has a structure that is extendable and contractable in the center axis 100a direction between the upper surface wall 506 and the closing wall 505. The other configurations are similar to those of the first embodiment.

Next, the operation of the fuel processing device according to this embodiment is described. The raw material F52 passes through the first raw material preheating unit 203 and the second raw material preheating unit 203a to be introduced into the reforming reaction flow path 402. The raw material F52 of the reforming reaction flow path 402 is heated from the inner peripheral side by the combustion gas F51 in the combustion gas flow path 401.

Further, the raw material F52 of the reforming reaction flow path 402 is heated also from the outer peripheral side by the catalyst layer outer peripheral gas F54 in the catalyst layer outer peripheral flow path 403. In the reforming reaction flow path 402, the reformed gas F53 is generated from the raw material F52 due to a catalytic action of the reforming catalyst 5.

Meanwhile, in the combustor 1, due to a combustion reaction between the combustion supporting gas F56 and the combustion fuel F55 or the combustion raw material F59, the combustion gas F51 of about 700 °C to 1,200 °C is generated. In the radiation heat transfer space 201, heat transfer is promoted by radiation heat from flame of the combustor 1, convection heat transfer by the combustion gas F51, or the like to heat the flame partition plate 3.

The combustion gas F51 flows into the combustion gas flow path 401. The combustion gas F51 in the combustion gas flow path 401 merges with the catalyst layer outer peripheral gas F54 at the merging portion 200 to turn into the exhaust gas F58. The exhaust gas F58 flows through the exhaust gas flow path 404.

The cathode gas F60 is supplied to the cathode gas preheating unit 204 from the outside of the fuel processing device 100. The cathode gas F60 flows into the preheating flow path 204a. The cathode gas F60 in the preheating flow path 204a is preheated through heat exchange between the exhaust gas F58 in the exhaust gas flow path 404 and the combustion gas F51 in the combustion gas flow path 401.

The cathode gas F60 receives thermal energy from the flame partition plate 3 to be further preheated and increased in temperature to about 550 °C. With this, the cathode gas F60 turns into the preheated cathode gas F61. The preheated cathode gas F61 passes through the exhaust flow path 204b to flow out from the fuel processing device 100, and is supplied to the heating source.

Heat is given to the cathode gas F60 from the exhaust gas F58 so that the temperature of the exhaust gas F58 decreases to, for example, about 65 °C. The exhaust gas F58 decreased in temperature is exhausted to the outside of the fuel processing device 100.

In this embodiment, the thermal energy of the exhaust gas F58 is collected in the cathode gas preheating unit 204 so that an operation with thermal efficiency higher than that of the fuel processing device 100 of each of the first embodiment to the fourth embodiment can be enabled.

The thermal energy collected in the cathode gas preheating unit 204 is used for preheating the cathode gas F60. The preheated cathode gas F60 is supplied to the fuel cell or the like. The exhaust gas of the fuel cell is used as the oxidizing agent F50. With this, heat can be effectively utilized in the fuel cell system. Further, the fuel processing device 100 has a temperature increase function of the cathode gas, thereby being capable of attaining a reduction in size and higher efficiency of the fuel cell system.

In this embodiment, the cathode gas F60 is preheated through heat exchange between the combustion gas F51 in the combustion gas flow path 401 and the exhaust gas F58 in the exhaust gas flow path 404, but the configuration is not limited thereto. The cathode gas F60 may be preheated only through heat exchange with the exhaust gas F58 in the exhaust gas flow path 404. In this case, a heat insulating material or the like may be provided so as to block heat transfer from the combustion gas flow path 401 to the cathode gas preheating unit 204.

Further, in this embodiment, the heat shield material 6 is not provided, but a heat shield material having an appropriate thickness may be provided in accordance with a temperature required for the preheated cathode gas F61.

As described above, the fuel processing device 100 according to this embodiment further includes the cathode gas preheating unit 204. The cathode gas preheating unit 204 is configured to preheat the cathode gas F60 to be supplied to the fuel cell through heat transfer from the exhaust gas F58. According to this configuration, heat can be effectively utilized in the fuel cell system.

In the fuel processing device 100 according to this embodiment, the cathode gas preheating unit 204 is further configured to preheat the cathode gas F60 by radiation heat from the combustion space 202.

### Sixth Embodiment

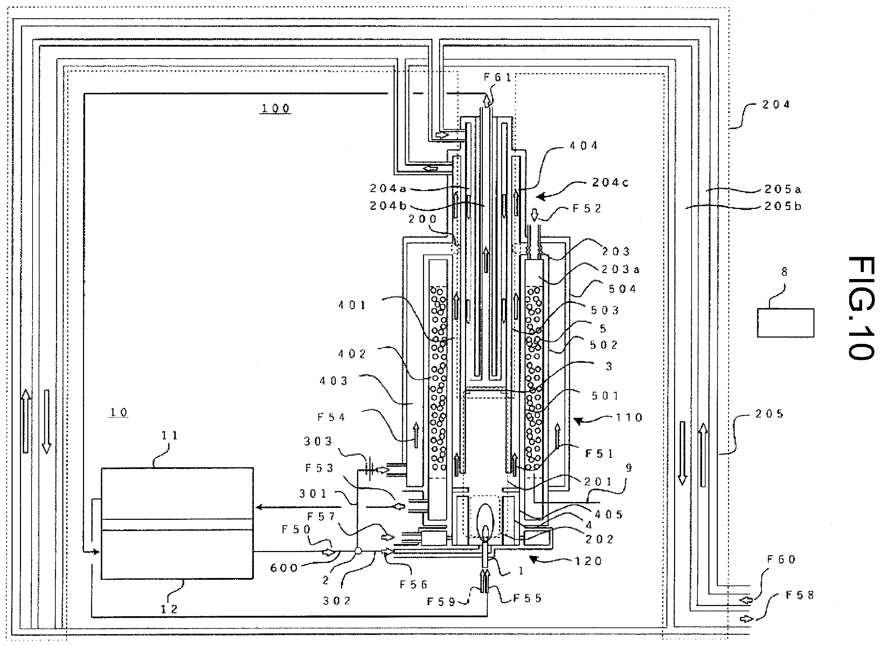

A fuel processing device according to a sixth embodiment is described. FIG. 10 is a schematic cross-sectional view of the fuel processing device according to this embodiment. The up-and-down direction of FIG. 10 represents a vertical direction.

As illustrated in FIG. 10, the cathode gas preheating unit 204 includes a main body portion 204c and a box body heat exchange unit 205. The main body portion 204c has the same configuration as that of the cathode gas preheating unit 204 in the fifth embodiment.

The box body heat exchange unit 205 is formed in a box body shape. The reforming unit 110, the combustion unit 120, and the main body portion 204c of the cathode gas preheating unit 204 are accommodated in the internal space of the box body heat exchange unit 205. That is, the reforming unit 110, the combustion unit 120, and the main body portion 204c of the cathode gas preheating unit 204 are surrounded by the box body heat exchange unit 205.

The box body heat exchange unit 205 includes a preheating flow path 205a and an exhaust gas flow path 205b. The exhaust gas flow path 205b is provided on the internal space side of the box body heat exchange unit 205 with respect to the preheating flow path 205a.

The preheating flow path 205a is connected to the upstream side of the preheating flow path 204a. The cathode gas F60 before flowing into the preheating flow path 204a flows through the preheating flow path 205a. The exhaust gas flow path 205b is connected to the downstream side of the exhaust gas flow path 404. The exhaust gas F58 having flowed out from the exhaust gas flow path 404 flows through the exhaust gas flow path 205b. In the box body heat exchange unit 205, heat exchange between the cathode gas F60 in the preheating flow path 205a and the exhaust gas F58 in the exhaust gas flow path 205b is performed.

In the internal space of the box body heat exchange unit 205, a fuel cell 10 is arranged. That is, the fuel cell 10 is surrounded by the box body heat exchange unit 205. The fuel cell 10 includes an anode 11 and a cathode 12. The anode 11 and the cathode 12 are partitioned from each other by an electrolyte.

The inlet of the anode 11 is connected to the reforming reaction flow path 402. The outlet of the anode 11 is connected to the combustor 1. The inlet of the cathode 12 is connected to the exhaust flow path 204b of the cathode gas preheating unit 204. The outlet of the cathode 12 is connected to the oxidizing agent flow path 600.

Although not illustrated, a heat insulating material that suppresses a heat interference between devices and heat radiation is arranged inside and outside the box body heat exchange unit 205 as required.

Next, the operation of the fuel processing device according to this embodiment is described. The exhaust gas F58 having flowed out from the exhaust gas flow path 404 flows into the exhaust gas flow path 205b of the box body heat exchange unit 205. The exhaust gas F58 in the exhaust gas flow path 205b gives thermal energy to the cathode gas F60 in the preheating flow path 205a. With this, the temperature of the exhaust gas F58 decreases. The exhaust gas F58 having flowed through the exhaust gas flow path 205b is exhausted to the outside from the box body heat exchange unit 205.

Meanwhile, the cathode gas F60 flows into the preheating flow path 205a of the box body heat exchange unit 205 from the outside. The cathode gas F60 in the preheating flow path 205a receives thermal energy from the exhaust gas F58 of the exhaust gas flow path 205b. The cathode gas F60 having flowed out from the preheating flow path 205a of the box body heat exchange unit 205 flows into the preheating flow path 204a of the main body portion 204c.

The cathode gas F60 in the preheating flow path 204a receives thermal energy from the exhaust gas F58 and the combustion gas F51 and the flame partition plate 3 to turn into the preheated cathode gas F61. The preheated cathode gas F61 passes through the exhaust flow path 204b to flow out from the main body portion 204c, and is supplied to the cathode 12 of the fuel cell 10.

In the cathode 12, oxygen required for a battery reaction of the fuel cell 10 is consumed. With this, the preheated cathode gas F61 turns into a cathode off-gas. The cathode off-gas flows out from the cathode 12, and flows into the oxidizing agent flow path 600 as the oxidizing agent F50.

The reformed gas F53 having flowed out from the reforming reaction flow path 402 is supplied to the anode 11 of the fuel cell 10. In the anode 11, hydrogen required for a battery reaction of the fuel cell 10 is consumed. With this, the reformed gas F53 turns into an anode off-gas. The anode off-gas flows out from the anode 11. At least a part of the anode off-gas having flowed out from the anode 11 is supplied to the combustor 1 as the combustion fuel F55.

In this embodiment, heat exchange between the cathode gas F60 and the exhaust gas F58 is performed in the box body heat exchange unit 205. Although the temperature difference between the cathode gas F60 and the exhaust gas F58 is relatively small, the heat transfer area between the cathode gas F60 and the exhaust gas F58 can be largely secured, thereby being capable of effectively performing heat recovery.

Further, the fuel cell 10, the reforming unit 110 of the fuel processing device 100, the combustion unit 120, and the main body portion 204c are surrounded by the box body heat exchange unit 205. With this, heat radiation from the fuel cell 10 and the fuel processing device 100 can be suppressed.

Further, the heat transfer area between the cathode gas F60 and the exhaust gas F58 can be largely secured in the box body heat exchange unit 205, thereby being capable of reducing the size of the main body portion 204c of the cathode gas preheating unit 204. Thus, according to this embodiment, higher efficiency and a reduction in size of the fuel processing device for a fuel cell can be attained.

The configuration of the fuel cell system is not limited to the configuration illustrated in FIG. 10. For example, a part of the anode off-gas may be used as the combustion fuel F55, and the remaining anode off-gas may be recycled as a part of the raw material F52. In this case, the flow path of the anode off-gas is configured to condense a part of the contained water vapor of the anode off-gas, and then, branch the anode off-gas. Further, the thermal energy of the anode off-gas may be collected, for example, to use for vaporization heat for generating water vapor.

As described above, in the fuel processing device 100 according to this embodiment, the cathode gas preheating unit 204 includes the box body heat exchange unit 205. The box body heat exchange unit 205 surrounds the combustion unit 120 and the reforming unit 110, and the fuel cell 10. In the box body heat exchange unit 205, heat exchange between the exhaust gas F58 and the cathode gas F60 is performed. According to this configuration, the heat transfer area between the cathode gas F60 and the exhaust gas F58 can be largely secured, thereby being capable of effectively performing heat recovery. Further, heat radiation from the fuel cell 10 and the fuel processing device 100 can be suppressed.

In the above-mentioned embodiments, the flow paths, such as the catalyst layer outer peripheral flow path 403, the combustion gas flow path 401, the exhaust gas flow path 404, the preheating flow path 205a, the exhaust gas flow path 205b, and the preheating flow path 204a, are described as being like spaces, but those flow paths may be replaced with heat transfer promoting structures, such as a fin structure and particle filling.

With this, the heat transfer performance can be further improved, thereby being capable of attaining higher efficiency and a reduction in size of the fuel processing device 100. Further, at least a part of the second raw material preheating unit 203a located on the upstream side of the reforming reaction flow path 402 may be formed as a heat transfer promoting structure. With this, heat transfer performance to the raw material F52 is improved, thereby being capable of attaining the fuel processing device 100 which has high efficiency and is small in size.

Further, in the above-mentioned embodiments, although not particularly described, it is desired to provide a unit for reducing a dynamic pressure of a flow, for example, a baffle plate, to the second raw material preheating unit 203a into which the raw material F52 flows from the first raw material preheating unit 203 in order to attain uniform gas distribution in the circumferential direction in the second raw material preheating unit 203a. Further, this description is not limited only to the second raw material preheating unit 203a, and, for example, also applies to a portion at which the catalyst layer outer peripheral gas F54 flows into the catalyst layer outer peripheral flow path 403.

### List of Reference Signs

- 1: combustor
- 2: oxidizing agent branching portion
- 3: flame partition plate
- 4: heat shield wall
- 5: reforming catalyst
- 6: heat shield material
- 8: controller
- 9: reformed gas temperature sensor
- 10: fuel cell
- 11: anode
- 12: cathode
- 100: fuel processing device
- 100a: center axis
- 110: reforming unit
- 120: combustion unit
- 200: merging portion
- 201: radiation heat transfer space
- 202: combustion space
- 203: first raw material preheating unit
- 203: a second raw material preheating unit
- 204: cathode gas preheating unit
- 204a: preheating flow path
- 204b: exhaust flow path
- 204c: main body portion
- 205: box body heat exchange unit
- 205a: preheating flow path
- 205b: exhaust gas flow path
- 300: oxidizing agent inflow pipe
- 301: catalyst layer outer peripheral gas introducing pipe
- 302: combustion supporting gas conduit
- 303: oxidizing agent distribution regulator
- 401: combustion gas flow path
- 401a: upstream portion
- 401b: downstream portion
- 402: reforming reaction flow path
- 403: catalyst layer outer peripheral flow path
- 403a: upstream portion
- 403b: downstream portion
- 404: exhaust gas flow path
- 405: air flow path
- 406: flow rate adjustment valve
- 501: inner wall
- 502: middle wall
- 503: flame tube wall
- 504: outer wall
- 505: closing wall
- 506: upper surface wall
- 507: closing wall
- 510: communication portion
- 600: oxidizing agent flow path
- 601: catalyst layer outer peripheral gas introducing flow path
- 602: combustion supporting gas flow path
- F50: oxidizing agent
- F51: combustion gas
- F52: raw material
- F53: reformed gas
- F54: catalyst layer outer peripheral gas
- F55: combustion fuel
- F56: combustion supporting gas
- F57: air
- F58: exhaust gas
- F59: combustion raw material
- F60: cathode gas
- F61: preheated cathode gas.

## Claims

1. A fuel processing device (100), comprising:
- a reforming unit (110) configured to generate a reformed gas (F53) from a raw material (F52); and
- a combustion unit (120) configured to combust a fuel and a combustion supporting gas (F56) in a combustion space (202) to generate a combustion gas (F51),
wherein the reforming unit (110) includes:
a first tubular wall (501); and
a second tubular wall (502) arranged on an outer peripheral side with respect to the first tubular wall (501),
wherein a reforming reaction flow path (402) is formed between the first tubular wall (501) and the second tubular wall (502), the reforming reaction flow path (402) being configured to be filled with a reforming catalyst (5) and to allow the raw material (F52) and the reformed gas (F53) to flow through the reforming reaction flow path (402),
wherein a combustion gas flow path (401) configured to allow the combustion gas (F51) to flow through the combustion gas flow path (401) is formed on an inner peripheral side with respect to the first tubular wall (501),
wherein the combustion gas flow path (401) is adjacent to the reforming reaction flow path (402) across the first tubular wall (501),
wherein an outer peripheral flow path (403) configured to allow an outer peripheral gas (F54) to flow through the outer peripheral flow path (403) is formed on an outer peripheral side with respect to the second tubular wall (502),
wherein the outer peripheral flow path (403) is adjacent to the reforming reaction flow path (402) across the second tubular wall (502), and wherein the fuel processing device (100) further comprises:
- a merging portion (200) configured to allow the combustion gas (F51) having flowed through the combustion gas flow path (401) and the outer peripheral gas (F54) having flowed through the outer peripheral flow path (403) to merge with each other;
- an exhaust gas flow path (404) configured to allow the combustion gas (F51) and the outer peripheral gas (F54) that have merged at the merging portion (200) to flow through the exhaust gas flow path (404) as an exhaust gas (F58);
- an oxidizing agent flow path (600) configured to allow an oxidizing agent (F50) supplied from a heating source to pass through the oxidizing agent flow path (600);
- an oxidizing agent branching portion (2) provided in the oxidizing agent flow path (600);
- a combustion supporting gas flow path (602) that connects between the oxidizing agent branching portion (2) and the combustion unit (120) and is configured to allow a part of the oxidizing agent (F50) to flow through the combustion supporting gas flow path (602) as the combustion supporting gas (F56); and
- an outer peripheral gas introducing flow path (601) that connects between the oxidizing agent branching portion (2) and the outer peripheral flow path (403) and is configured to allow the other part of the oxidizing agent (F50) to flow through the outer peripheral gas introducing flow path (601) as the outer peripheral gas (F54).

2. The fuel processing device (100) according to claim 1,
wherein an oxidizing agent (F50) distribution regulator configured to determine a distribution ratio between the combustion supporting gas (F56) and the outer peripheral gas (F54) is provided in at least one of the combustion supporting gas flow path (602) or the outer peripheral gas introducing flow path (601).

3. The fuel processing device (100) according to claim 1 or 2,
wherein the outer peripheral flow path (403) includes:
- an upstream portion (403a) formed on an outer peripheral side with respect to the second tubular wall (502); and
- a downstream portion (403b) formed on an inner peripheral side with respect to the first tubular wall (501),
wherein the merging portion (200) is located on an inner peripheral side with respect to the first tubular wall (501), and
wherein the upstream portion (403a) of the outer peripheral flow path (403) and the downstream portion (403b) of the outer peripheral flow path (403) face each other across the reforming reaction flow path (402).

4. The fuel processing device (100) according to claim 1 or 2,
wherein the combustion gas flow path (401) includes:
- an upstream portion (401a) formed on an inner peripheral side with respect to the first tubular wall (501); and
- a downstream portion (401b) formed on an outer peripheral side with respect to the second tubular wall (502),
wherein the merging portion (200) is located on an outer peripheral side with respect to the second tubular wall (502), and
wherein the upstream portion (401a) of the combustion gas flow path (401) and the downstream portion (401b) of the combustion gas flow path (401) face each other across the reforming reaction flow path (402).

5. The fuel processing device (100) according to any one of claims 1 to 4, further comprising:
- a flame tube wall (503) arranged on an inner peripheral side with respect to the first tubular wall (501);
- a flame partition plate (3) arranged inside the flame tube wall (503) so as to be opposed to the combustion unit (120); and
- a radiation heat transfer space (201) surrounded by the flame tube wall (503), the flame partition plate (3), and the combustion unit (120).

6. The fuel processing device (100) according to any one of claims 1 to 5, further comprising a raw material preheating unit (203) configured to preheat the raw material (F52) flowing into the reforming reaction flow path (402) by heat transfer from the outer peripheral gas (F54) or the combustion gas (F51).

7. The fuel processing device (100) according to claim 6,
wherein the raw material preheating unit (203) has a structure that is extendable and contractable.

8. The fuel processing device (100) according to any one of claims 1 to 7, wherein the heating source is a fuel cell (10), and
wherein the oxidizing agent (F50) is a cathode off-gas supplied from the fuel cell (10).

9. The fuel processing device (100) according to claim 8,
further comprising a cathode gas preheating unit (204) configured to preheat a cathode gas (F60) supplied to the fuel cell (10) through heat transfer from the exhaust gas (F58).

10. The fuel processing device (100) according to claim 9,
wherein the cathode gas preheating unit (204) is further configured to preheat the cathode gas (F60) by radiation heat from the combustion space (202).

11. The fuel processing device (100) according to claim 9 or 10,
wherein the cathode gas preheating unit (204) includes a box body heat exchange unit (205) surrounding the combustion unit (120) and the reforming unit (110), and the fuel cell (10), and
wherein the box body heat exchange unit (205) is configured to allow heat exchange between the exhaust gas (F58) and the cathode gas (F60) to be performed in the box body heat exchange unit (205).

12. The fuel processing device (100) according to any one of claims 1 to 11, further comprising an air flow path (405) configured to supply air for temperature adjustment to the combustion gas (F51) on a downstream side with respect to the combustion space (202).

13. The fuel processing device (100) according to claim 12,
further comprising:
- a reformed gas temperature sensor (9) configured to detect a temperature of the reformed gas (F53) at an outlet of the reforming reaction flow path (402); and
- a controller,
wherein the controller is configured to control a flow rate of the air supplied to the combustion gas (F51) based on the temperature detected by the reformed gas temperature sensor (9).

## Patentansprüche

1. Brennstoffverarbeitungsvorrichtung (100), die das Folgende aufweist:
- eine Reformierungseinheit (110), die dazu konfiguriert ist, ein reformiertes Gas (F53) aus einem Rohmaterial (F52) zu erzeugen; und
- eine Verbrennungseinheit (120), die dazu konfiguriert ist, einen Brennstoff und ein Verbrennungsunterstützungsgas (F56) in einem Verbrennungsraum (202) zu verbrennen, um ein Verbrennungsgas (F51) zu erzeugen,
wobei die Reformierungseinheit (110) das Folgende aufweist:
eine erste rohrförmige Wand (501); und
eine zweite rohrförmige Wand (502), die an einer Außenumfangsseite in Bezug auf die erste rohrförmige Wand (501) angeordnet ist,
- wobei ein Reformierungsreaktions-Strömungsweg (402) zwischen der ersten rohrförmigen Wand (501) und der zweiten rohrförmigen Wand (502) ausgebildet ist, wobei der Reformierungsreaktions-Strömungsweg (402) dazu konfiguriert ist, mit einem Reformierungskatalysator (5) gefüllt zu werden sowie das Rohmaterial (F52) und das reformierte Gas (F53) durch den Reformierungsreaktions-Strömungsweg (402) strömen zu lassen,
- wobei ein Verbrennungsgas-Strömungsweg (401), der dazu konfiguriert ist, das Verbrennungsgas (F51) durch den Verbrennungsgas-Strömungsweg (401) strömen zu lassen, an einer Innenumfangsseite in Bezug auf die erste rohrförmige Wand (501) ausgebildet ist,
- wobei der Verbrennungsgas-Strömungsweg (401) über die erste rohrförmige Wand (501) an den Reformierungsreaktions-Strömungsweg (402) angrenzt,
- wobei ein Außenumfangs-Strömungsweg (403), der dazu konfiguriert ist, ein Außenumfangsgas (F54) durch den Außenumfangs-Strömungsweg (403) strömen zu lassen, an einer Außenumfangsseite in Bezug auf die zweite rohrförmige Wand (502) ausgebildet ist,
- wobei der Außenumfangs-Strömungsweg (403) über die zweite rohrförmige Wand (502) an den Reformierungsreaktions-Strömungsweg (402) angrenzt, und
- wobei die Brennstoffverarbeitungsvorrichtung (100) ferner das Folgende aufweist:
- einen Vereinigungsbereich (200), der dazu konfiguriert ist, dass sich das Verbrennungsgas (F51), das durch den Verbrennungsgas-Strömungsweg (401) geströmt ist, und das Außenumfangsgas (F54), das durch den Außenumfangs-Strömungsweg (403) geströmt ist, miteinander vereinigen können;
- einen Abgas-Strömungsweg (404), der dazu konfiguriert ist, das Verbrennungsgas (F51) und das Außenumfangsgas (F54), die sich im Vereinigungsbereich (200) vereinigt haben, als ein Abgas (F58) durch den Abgas-Strömungsweg (404) strömen zu lassen;
- einen Oxidationsmittel-Strömungsweg (600), der dazu konfiguriert ist, ein Oxidationsmittel (F50), das von einer Heizquelle zugeführt worden ist, durch den Oxidationsmittel-Strömungsweg (600) strömen zu lassen;
- einen Oxidationsmittel-Verzweigungsbereich (2), der in dem Oxidationsmittel-Strömungsweg (600) angeordnet ist;
- einen Verbrennungsunterstützungsgas-Strömungsweg (602), der den Oxidationsmittel-Verzweigungsbereich (2) und die Verbrennungseinheit (120) verbindet und dazu konfiguriert ist, ein Teil des Oxidationsmittels (F50) als Verbrennungsunterstützungsgas (F56) durch den Verbrennungsunterstützungsgas-Strömungsweg (602) strömen zu lassen, und
- einen Außenumfangsgas-Einleitungs-Strömungsweg (601), der den Oxidationsmittel-Verzweigungsbereich (2) und den Außenumfangs-Strömungsweg (403) verbindet und dazu konfiguriert ist, den anderen Teil des Oxidationsmittels (F50) als Außenumfangsgas (F54) durch den Außenumfangsgas-Einleitungs-Strömungsweg (601) strömen zu lassen.

2. Brennstoffverarbeitungsvorrichtung (100) nach Anspruch 1,
wobei ein Verteilungsregulierer für Oxidationsmittel (F50), der dazu konfiguriert ist, ein Verteilungsverhältnis zwischen dem Verbrennungsunterstützungsgas (F56) und dem Außenumfangsgas (F54) zu bestimmen, in zumindest einem von dem Verbrennungsunterstützungsgas-Strömungsweg (602) oder dem Außenumfangsgas-Einleitungs-Strömungsweg (601) angeordnet ist.

3. Brennstoffverarbeitungsvorrichtung (100) nach Anspruch 1 oder 2,
wobei der Außenumfangs-Strömungsweg (403) das Folgende aufweist:
- einen stromaufwärtigen Bereich (403a), der an einer Außenumfangsseite in Bezug auf die zweite rohrförmige Wand (502) ausgebildet ist; und
- einen stromabwärtigen Bereich (403b), der an einer Innenumfangsseite in Bezug auf die erste rohrförmige Wand (501) ausgebildet ist,
wobei der Vereinigungsbereich (200) an einer Innenumfangsseite in Bezug auf die erste rohrförmige Wand (501) angeordnet ist, und
wobei der stromaufwärtige Bereich (403a) des Außenumfangs-Strömungswegs (403) und der stromabwärtige Bereich (403b) des Außenumfangs-Strömungswegs (403) einander über den Reformierungsreaktions-Strömungsweg (402) gegenüberliegen.

4. Brennstoffverarbeitungsvorrichtung (100) nach Anspruch 1 oder 2,
wobei der Verbrennungsgas-Strömungsweg (401) das Folgende aufweist:
- einen stromaufwärtigen Bereich (401a), der an einer Innenumfangsseite in Bezug auf die erste rohrförmige Wand (501) ausgebildet ist; und
- einen stromabwärtigen Bereich (401b), der an einer Außenumfangsseite in Bezug auf die zweite rohrförmige Wand (502) ausgebildet ist,
wobei der Vereinigungsbereich (200) an einer Außenumfangsseite in Bezug auf die zweite rohrförmige Wand (502) angeordnet ist, und
wobei der stromaufwärtige Bereich (401a) des Verbrennungsgas-Strömungswegs (401) und der stromabwärtige Bereich (401b) des Verbrennungsgas-Strömungswegs (401) einander über den Reformierungsreaktions-Strömungsweg (402) gegenüberliegen.

5. Brennstoffverarbeitungsvorrichtung (100)
nach einem der Ansprüche 1 bis 4, die ferner das Folgende aufweist:
- eine Flammrohrwand (503), die an einer Innenumfangsseite in Bezug auf die erste rohrförmige Wand (501) angeordnet ist;
- eine Flammentrennplatte (3), die innerhalb der Flammrohrwand (503) so angeordnet ist, dass sie der Verbrennungseinheit (120) gegenüberliegt; und
- einen Strahlungswärmeübertragungsraum (201), der von der Flammrohrwand (503), der Flammentrennplatte (3) und der Verbrennungseinheit (120) umgeben ist.

6. Brennstoffverarbeitungsvorrichtung (100)
nach einem der Ansprüche 1 bis 5,
die ferner eine Rohmaterialvorwärmeinheit (203) aufweist, die dazu konfiguriert ist, das Rohmaterial (F52), das in den Reformierungsreaktions-Strömungsweg (402) strömt, durch Wärmeübertragung von dem Außenumfangsgas (F54) oder dem Verbrennungsgas (F51) vorzuwärmen.

7. Brennstoffverarbeitungsvorrichtung (100) nach Anspruch 6,
wobei die Rohmaterialvorwärmeinheit (203) eine Struktur aufweist, die ausdehnbar und kontrahierbar ist.

8. Brennstoffverarbeitungsvorrichtung (100)
nach einem der Ansprüche 1 bis 7,
wobei die Heizquelle eine Brennstoffzelle (10) ist und
wobei das Oxidationsmittel (F50) ein Kathodenabgas ist, das von der Brennstoffzelle (10) geliefert wird.

9. Brennstoffverarbeitungsvorrichtung (100) nach Anspruch 8,
die ferner eine Kathodengasvorwärmeinheit (204) aufweist, die dazu konfiguriert ist, ein Kathodengas (F60) vorzuwärmen, das der Brennstoffzelle (10) zugeführt wird, und zwar durch Wärmeübertragung von dem Abgas (F58).

10. Brennstoffverarbeitungsvorrichtung (100) nach Anspruch 9,
wobei die Kathodengasvorwärmeinheit (204) ferner dazu konfiguriert ist, das Kathodengas (F60) durch Strahlungswärme aus dem Verbrennungsraum (202) vorzuwärmen.

11. Brennstoffverarbeitungsvorrichtung (100) nach Anspruch 9 oder 10,
wobei die Kathodengasvorwärmeinheit (204) eine Kastenkörper-Wärmetauschereinheit (205) aufweist, welche die Verbrennungseinheit (120), die Reformierungseinheit (110) und die Brennstoffzelle (10) umgibt, und
wobei die Kastenkörper-Wärmetauschereinheit (205) so konfiguriert ist, dass ein Wärmeaustausch zwischen dem Abgas (F58) und dem Kathodengas (F60) in der Kastenheizkörper-Wärmetauschereinheit (205) erfolgen kann.

12. Brennstoffverarbeitungsvorrichtung (100)
nach einem der Ansprüche 1 bis 11,
die ferner einen Luftströmungsweg (405) aufweist, der dazu konfiguriert ist, Luft zur Temperatureinstellung dem Verbrennungsgas (F51) auf einer stromabwärtigen Seite in Bezug auf den Verbrennungsraum (202) zuzuführen.

13. Brennstoffverarbeitungsvorrichtung (100) nach Anspruch 12,
die ferner das Folgende aufweist:
- einen Temperatursensor (9) für reformiertes Gas, der dazu konfiguriert ist, eine Temperatur des reformierten Gases (F53) an einem Auslass des Reformierungsreaktions-Strömungswegs (402) zu detektieren; und
- eine Steuereinheit,
wobei die Steuereinheit dazu konfiguriert ist, eine Strömungsrate der Luft zu steuern, die dem Verbrennungsgas (F51) zugeführt wird, und zwar basierend auf der Temperatur, die von dem Temperatursensor (9) für reformiertes Gas detektiert worden ist.

## Revendications

1. Dispositif de traitement de combustible (100), comprenant :
- une unité de reformage (110) configurée pour générer un gaz reformé (F53) à partir d'un matériau brut (F52) ; et
- une unité de combustion (120) configurée pour brûler un combustible et un gaz porteur de combustion (F56) dans un espace de combustion (202) pour générer un gaz de combustion (F51),
dans lequel l'unité de reformage (110) inclut :
une première paroi tubulaire (501) ; et
une seconde paroi tubulaire (502) agencée sur un côté périphérique extérieur par rapport à la première paroi tubulaire (501),
- dans lequel un trajet d'écoulement de réaction de reformage (402) est formé entre la première paroi tubulaire (501) et la seconde paroi tubulaire (502), le trajet d'écoulement de réaction de reformage (402) étant configuré pour être rempli avec un catalyseur de reformage (5) et pour permettre au matériau brut (F52) et au gaz reformé (F53) de s'écouler à travers le trajet d'écoulement de réaction de reformage (402),
- dans lequel un trajet d'écoulement de gaz de combustion (401) configuré pour permettre au gaz de combustion (F51) de s'écouler à travers le trajet d'écoulement de gaz de combustion (401) est formé sur un côté périphérique intérieur par rapport à la première paroi tubulaire (501),
- dans lequel le trajet d'écoulement de gaz de combustion (401) est adjacent au trajet d'écoulement de réaction de reformage (402) à travers la première paroi tubulaire (501),
- dans lequel un trajet d'écoulement périphérique extérieur (403) configuré pour permettre à un gaz périphérique extérieur (F54) de s'écouler à travers le trajet d'écoulement périphérique extérieur (403) est formé sur un côté périphérique extérieur par rapport à la seconde paroi tubulaire (502),
- dans lequel le trajet d'écoulement périphérique extérieur (403) est adjacent au trajet d'écoulement de réaction de reformage (402) à travers la seconde paroi tubulaire (502), et
- dans lequel le dispositif de traitement de combustible (100) comprend en outre :
- une portion de fusion (200) configurée pour permettre au gaz de combustion (F51) qui s'est écoulé à travers le trajet d'écoulement de gaz de combustion (401) et au gaz périphérique extérieur (F54) qui s'est écoulé à travers le trajet d'écoulement périphérique extérieur (403) de fusionner l'un avec l'autre ;
- un trajet d'écoulement de gaz d'échappement (404) configuré pour permettre au gaz de combustion (F51) et au gaz périphérique extérieur (F54) qui ont fusionné au niveau de la portion de fusion (200) de s'écouler à travers le trajet d'écoulement de gaz d'échappement (404) à titre de gaz d'échappement (F58) ;
- un trajet d'écoulement d'agent oxydant (600) configuré pour permettre à un agent oxydant (F50) alimenté depuis une source de chauffage de passer à travers le trajet d'écoulement d'agent oxydant (600) ;
- une portion de ramification d'agent oxydant (2) prévue dans le trajet d'écoulement d'agent oxydant (600) ;
- un trajet d'écoulement de gaz porteur de combustion (602) qui assure une connexion entre la portion de ramification d'agent oxydant (2) et l'unité de combustion (120) et qui est configuré pour permettre à une partie de l'agent oxydant (F50) de s'écouler à travers le trajet d'écoulement de gaz porteur de combustion (602) à titre de gaz porteur de combustion (F56) ; et
- un trajet d'écoulement d'introduction de gaz périphérique extérieur (601) qui assure une connexion entre la portion de ramification d'agent oxydant (2) et le trajet d'écoulement périphérique extérieur (403) et qui est configuré pour permettre à l'autre partie de l'agent oxydant (F50) de s'écouler à travers le trajet d'écoulement d'introduction de gaz périphérique extérieur (601) à titre de gaz périphérique extérieur (F54).

2. Dispositif de traitement de combustible (100) selon la revendication 1, dans lequel un régulateur de distribution d'agent oxydant (F50) configuré pour déterminer un rapport de distribution entre le gaz porteur de combustion (F56) et le gaz périphérique extérieur (F54) est prévu dans l'un au moins du trajet d'écoulement de gaz porteur de combustion (602) et du trajet d'écoulement d'introduction de gaz périphérique extérieur (601).

3. Dispositif de traitement de combustible (1) selon la revendication 1 ou 2,
dans lequel le trajet d'écoulement périphérique extérieur (403) inclut :
- une portion amont (403a) formée sur un côté périphérique extérieur par rapport à la seconde paroi tubulaire (502) ; et
- une portion aval (403b) formée sur un côté périphérique intérieur par rapport à la première paroi tubulaire (501),
dans lequel la portion de fusion (200) est située sur un côté périphérique intérieur par rapport à la première paroi tubulaire (501), et
dans lequel la portion amont (403a) du trajet d'écoulement périphérique extérieur (403) et la portion aval (403b) du trajet d'écoulement périphérique extérieur (403) sont tournées l'une vers l'autre à travers le trajet d'écoulement de réaction de reformage (402).

4. Dispositif de traitement de combustible (100) selon la revendication 1 ou 2,
dans lequel le trajet d'écoulement de gaz de combustion (401) inclut :
- une portion amont (401a) formée sur un côté périphérique intérieur par rapport à la première paroi tubulaire (501) ; et
- une portion aval (401b) formée sur un côté périphérique extérieur par rapport à la seconde paroi tubulaire (502),
dans lequel la portion de fusion (200) est située sur un côté périphérique extérieur par rapport à la seconde paroi tubulaire (502), et
dans lequel la portion amont (401a) du trajet d'écoulement de gaz de combustion (401) et la portion aval (401b) du trajet d'écoulement de gaz de combustion (401) sont tournées l'une vers l'autre à travers le trajet d'écoulement de réaction de reformage (402).

5. Dispositif de traitement de combustible (100) selon l'une quelconque des revendications 1 à 4,
comprenant en outre :
- une paroi de tube à flamme (503) agencée sur un côté périphérique intérieur par rapport à la première paroi tubulaire (501) ;
- une plaque de séparation de flamme (3) agencée à l'intérieur de la paroi de tube à flamme (503) de manière à être opposée à l'unité de combustion (120) ; et
- un espace de transfert de chaleur de rayonnement (201) entouré par la paroi de tube à flamme (503), la plaque de séparation de flamme (3), et l'unité de combustion (120).

6. Dispositif de traitement de combustible (100) selon l'une quelconque des revendications 1 à 5,
comprenant en outre une unité de préchauffage de matériau brut (203) configurée pour préchauffer le matériau brut (F52) s'écoulant dans le trajet d'écoulement de réaction de reformage (402) par transfert de chaleur à partir du gaz périphérique extérieur (F54) ou du gaz de combustion (F51).

7. Dispositif de traitement de combustible (100) selon la revendication 6, dans lequel l'unité de préchauffage de matériau brut (203) a une structure qui peut être mise en extension et en contraction.

8. Dispositif de traitement de combustible (100) selon l'une quelconque des revendications 1 à 7,
dans lequel la source de chauffage est une pile à combustible (10), et dans lequel l'agent oxydant (F50) est un gaz résiduel cathodique alimenté depuis la pile à combustible (10).

9. Dispositif de traitement de combustible (100) selon la revendication 8, comprenant en outre une unité de préchauffage de gaz cathodique (204) configurée pour préchauffer un gaz cathodique (F60) alimenté à la pile à combustible (10) par transfert de chaleur à partir du gaz d'échappement (F58).

10. Dispositif de traitement de combustible (100) selon la revendication 9, dans lequel l'unité de préchauffage de gaz cathodique (204) est en outre configurée pour préchauffer le gaz cathodique (F60) par chaleur de rayonnement provenant de l'espace de combustion (202).

11. Dispositif de traitement de combustible (100) selon la revendication 9 ou 10,
dans lequel l'unité de préchauffage de gaz cathodique (204) inclut une unité d'échange de chaleur formant corps de boîtier (205) entourant l'unité de combustion (120) et l'unité de reformage (110), et la pile à combustible (10), et
dans lequel l'unité d'échange de chaleur formant corps de boîtier (205) est configurée pour permettre un échange de chaleur entre le gaz d'échappement (F58) et le gaz cathodique (F60) devant être effectué dans l'unité d'échange de chaleur formant corps de boîtier (205).

12. Dispositif de traitement de combustible (100) selon l'une quelconque des revendications 1 à 11,
comprenant en outre un trajet d'écoulement d'air (405) configuré pour alimenter de l'air destiné à un ajustement de température au gaz de combustion (F51) sur un côté aval par rapport à l'espace de combustion (202).

13. Dispositif de traitement de combustible (100) selon la revendication 12, comprenant en outre :
- un capteur de température de gaz reformé (9) configuré pour détecter une température du gaz reformé (F53) au niveau d'une sortie du trajet d'écoulement de réaction de reformage (402) ; et
- un contrôleur,
dans lequel le contrôleur est configuré pour commander un débit de l'air alimenté au gaz de combustion (F51) sur la base de la température détectée par le capteur de température de gaz reformé (9).
